# EUROPEAN PATENT APPLICATION

(11) **EP 4 585 575 A1**
(43) Date of publication of application: **16.07.2025**
(21) Application number: 23863279.8
(22) Date of filing: 08.09.2023
(51) Int. Cl.: C03C 3/091, C03C 3/085, C03C 3/087, C03C 3/095, G11B 5/73, G11B 5/82

(54) **GLASS FOR MAGNETIC RECORDING MEDIUM SUBSTRATE, MAGNETIC RECORDING MEDIUM SUBSTRATE, AND MAGNETIC RECORDING/REPRODUCING APPARATUS**

(30) Priority: 08.09.2022 JP 2022143093
(71) Applicant: HOYA CORPORATION, Shinjuku-ku Tokyo 160-8347 (JP)
(72) Inventor: TOKUMITSU Shuzo, Tokyo 160-8347 (JP); HASHIMOTO Kazuaki, Tokyo 160-8347 (JP)
(74) Representative: Vossius & Partner Patentanwälte Rechtsanwälte mbB
(86) International application number: PCT/JP2023/032919
(87) International publication number: WO 2024/053741

(57) **Abstract**

Provided is a glass for a magnetic recording medium substrate wherein a temperature T1 at a viscosity of 10^{2.0} dPa·s is 1600°C or less, and a specific elastic modulus is 34.0 MNm/kg or more.

## Description

### Cross-reference to Related Application

The present application claims priority from Japanese Patent Application No. 2022-143093 filed September 8, 2022, the entire description of which is hereby incorporated by reference herein.

### Technical Field

The present invention relates to a glass for a magnetic recording medium substrate, a magnetic recording medium substrate, and a magnetic recording/reproducing device.

### Background Art

Heretofore, a substrate made of an aluminum alloy was used as a substrate for a magnetic recording medium such as a hard disk (magnetic recording medium substrate). However, drawbacks such as susceptibility to deformation have been pointed out for a substrate made of an aluminum alloy. Therefore, nowadays, magnetic recording medium substrates made of glass are widely used (for example, see PTL 1 (the entire description of which is incorporated by reference herein)).

PTL1: JP 2021-86643A

### Summary of Invention

A magnetic recording medium substrate made of glass is produced through a step for molding molten glass.

An aspect of the present invention aims to provide a magnetic recording medium substrate made of glass suitable for molding performed with use of various molding methods.

PTL 1 (JP 2021-86643A) discloses a glass substrate for a magnetic recording medium that has viscosity characteristics suitable for molding performed with use of an overflow down-draw method (see paragraph 0063 of PTL 1), specifically, a temperature of 1590°C or more and 1640°C or less at a high-temperature viscosity of 10^{2.5} dPa·s (see Tables 1 to 3 of PTL 1). However, the inventors of the present application newly found through studies that glass whose viscosity characteristics are such that the temperature at a viscosity of 10^{2.0} dPa·s is 1600°C or less and/or glass whose viscosity characteristics are such that the temperature at the viscosity of 10^{2.5} dPa·s is 1500°C or less is suitable for molding performed with use of various molding methods such as press molding, for example.

An aspect of the present invention is as follows.
[1] A glass for a magnetic recording medium substrate (hereinafter also referred to as a "glass 1-A"), the glass being an amorphous glass, wherein a temperature T1 at a viscosity of 10^{2.0} dPa·s is 1600°C or less, and a specific elastic modulus is 34.0 MNm/kg or more.
[2] The glass for a magnetic recording medium substrate according to [1], wherein a total content of Li₂O and Na₂O (Li₂O+Na₂O) is 0.50 mol% or more.
[3] A glass for a magnetic recording medium substrate (hereinafter also referred to as a "glass 1-B"), the glass being an amorphous glass, wherein a temperature T2 at a viscosity of 10^{2.5} dPa·s is 1500°C or less, and a specific elastic modulus is 34.0 MNm/kg or more.
[4] The glass for a magnetic recording medium substrate according to [3], wherein a total content of Li₂O and Na₂O (Li₂O+Na₂O) is 0.50 mol% or more.
[5] A glass for a magnetic recording medium substrate (hereinafter also referred to as a "glass 1-C"), the glass being an amorphous glass, wherein a temperature T1 at a viscosity of 10^{2.0} dPa·s is 1600°C or less, and a total content of Li₂O and Na₂O (Li₂O+Na₂O) is 0.50 mol% or more.
[6] A magnetic recording medium substrate made of the glass for a magnetic recording medium substrate according to any one of [1] to [5].
[7] A magnetic recording medium including: the magnetic recording medium substrate according to [6]; and a magnetic recording layer.
[8] A magnetic recording/reproducing device including the magnetic recording medium according to [7].

Another aspect of the present invention is as follows.
[1] A glass for a magnetic recording medium substrate (hereinafter also referred to as a "glass 4-A"), the glass being an amorphous glass, wherein a temperature T1 at a viscosity of 10^{2.0} dPa·s is 1700°C or less, and a specific elastic modulus is 34.0 MNm/kg or more.
[2] The glass for a magnetic recording medium substrate according to [1], wherein a total content of Li₂O and Na₂O (Li₂O+Na₂O) is 0.50 mol% or more.
[3] A glass for a magnetic recording medium substrate (hereinafter also referred to as a "glass 4-B"), the glass being an amorphous glass, wherein a temperature T2 at a viscosity of 10^{2.5} dPa·s is 1560°C or less, and a specific elastic modulus is 34.0 MNm/kg or more.
[4] The glass for a magnetic recording medium substrate according to [3], wherein a total content of Li₂O and Na₂O (Li₂O+Na₂O) is 0.50 mol% or more.
[5] A glass for a magnetic recording medium substrate (hereinafter also referred to as a "glass 4-C"), the glass being an amorphous glass, wherein a temperature T1 at a viscosity of 10^{2.0} dPa·s is 1700°C or less, and a total content of Li₂O and Na₂O (Li₂O+Na₂O) is 0.50 mol% or more.
[6] A magnetic recording medium substrate made of the glass for a magnetic recording medium substrate according to any one of [1] to [5].
[7] A magnetic recording medium including: the magnetic recording medium substrate according to [6]; and a magnetic recording layer.
[8] A magnetic recording/reproducing device including the magnetic recording medium according to [7].

It is also desirable that a glass for a magnetic recording medium substrate has high rigidity. This is because of the following reasons.

A magnetic recording medium is usually installed inside a hard disk drive (HDD) incorporated in a device such as a personal computer. In an HDD, a plurality of magnetic recording media (magnetic disks) are attached to the rotation shaft of a spindle motor, and data is written on or read from magnetic recording layers of the magnetic recording media that are rotated at a high speed inside the HDD by an actuator incorporated in the HDD. Large vibrations of a magnetic recording medium when the magnetic recording medium is rotated at a high speed in order to write or read data may result in a head crash, which is a collision between a magnetic head and the magnetic recording medium surface. The recording capacity of an HDD can be increased by reducing the thickness of each magnetic recording medium and installing a larger number of magnetic recording media in the HDD. However, in general, as the thickness of the substrate is reduced in order to reduce the thickness of the magnetic recording medium, the magnetic recording medium tends to vibrate more easily during high-speed rotation. In order to suppress such vibration, it is desirable to use, as the glass substrate of a magnetic recording medium, a glass substrate that has high rigidity and is unlikely to vibrate during high-speed rotation even when the thickness of the glass substrate is reduced. One example of an indicator related to the rigidity of glass is the specific elastic modulus.

In view of the above, another aspect of the present invention aims to provide a high-rigidity glass for a magnetic recording medium substrate, and an embodiment of the present invention aims to provide a glass for a magnetic recording medium substrate having a high specific elastic modulus.

Another aspect of the present invention is as follows.
[1] A glass for a magnetic recording medium substrate or for a glass spacer for a magnetic recording/reproducing device (hereinafter referred to as a "glass 2"), the glass being an amorphous glass including at least Li₂O,
   wherein a total content of Na₂O and K₂O is 0 mol% or more and 6.00 mol% or less,
   a B₂O₃ content is 0 mol% or more and 10.00 mol% or less, and
   a CaO content is 0 mol% or more and 1.00 mol% or less.
[2] The glass according to [1], wherein the CaO content is 0 mol% or more and 0.50 mol% or less.
[3] The glass according to [1] or [2], wherein the CaO content is 0 mol% or more and 0.10 mol% or less.
[4] The glass according to any one of [1] to [3], wherein the glass does not contain CaO.
[5] The glass according to any one of [1] to [4], wherein the B₂O₃ content is 0.1 mol% or more and 10.00 mol% or less.
[6] The glass according to any one of [1] to [5], wherein a SiO₂ content is 50.00 mol% or more and 70.00 mol% or less.
[7] The glass according to any one of [1] to [6], wherein a SiO₂ content is 55.00 mol% or more and 68.00 mol% or less.
[8] The glass according to any one of [1] to [7], wherein a Li₂O content is 1.00 mol% or more and 10.00 mol% or less.
[9] The glass according to any one of [1] to [8], wherein a Li₂O content is 3.00 mol% or more and 6.00 mol% or less.
[10] The glass according to any one of [1] to [9], wherein the glass does not contain any alkali metal oxide other than Li₂O.
[11] The glass according to any one of [1] to [10], wherein an Al₂O₃ content is 10.00 mol% or more and 20.00 mol% or less.
[12] The glass according to any one of [1] to [11], wherein an Al₂O₃ content is 10.00 mol% or more and 17.00 mol% or less.
[13] The glass according to any one of [1] to [12], wherein a MgO content is 10.00 mol% or more and 25.00 mol% or less.
[14] The glass according to any one of [1] to [13], further including an oxide of one or more metals selected from the group consisting of Zr, Y, La, Ti, Hf, Cu, Co, Mn, Nd, Pr, Nb, V, Cr, Ni, Mo, Ho, and Er.
[15] The glass according to any one of [1] to [14], wherein a mole ratio (Li₂O/MgO) of a Li₂O content to a MgO content is more than 0.080.
[16] The glass according to any one of [1] to [15], wherein a mole ratio (Li₂O/(Li₂O+MgO)) of a Li₂O content to a total content of Li₂O and MgO is more than 0.080.
[17] The glass according to any one of [1] to [16], wherein a mole ratio (Al₂O₃/SiO₂) of an Al₂O₃ content to a SiO₂ content is less than 0.270.
[18] The glass according to any one of [1] to [17], wherein a mole ratio (B₂O₃/SiO₂) of the B₂O₃ content to a SiO₂ content is more than 0 and less than 0.020.
[19] The glass according to any one of [1] to [18], wherein a mole ratio (B₂O₃/(B₂O₃+SiO₂)) of the B₂O₃ content to a total content of B₂O₃ and SiO₂ is more than 0 and less than 0.020.
[20] The glass according to any one of [1] to [19], wherein a mole ratio (B₂O₃/(B₂O₃+SiO₂+Al₂O₃)) of the B₂O₃ content to a total content of B₂O₃, SiO₂, and Al₂O₃ is more than 0 and less than 0.010.
[21] The glass according to any one of [1] to [20], wherein a mole ratio (MgO/(MgO+CaO+SrO+BaO)) of a MgO content to a total content of MgO, CaO, SrO, and BaO is 0.970 or more and 1.000 or less.
[22] The glass according to any one of [1] to [21], wherein a mole ratio (Li₂O/(Li₂O+Na₂O+K₂O)) of a Li₂O content to a total content of Li₂O, Na₂O, and K₂O is 0.760 or more and 1.000 or less.
[23] The glass according to any one of [1] to [22], wherein a mole ratio (B₂O₃/Li₂O) of the B₂O₃ content to a Li₂O content is more than 0 and less than 0.250.
[24] The glass according to any one of [1] to [23], wherein a specific elastic modulus is 35.0 MNm/kg or more.
[25] The glass according to any one of [1] to [24], wherein a glass transition temperature is 700°C or more.
[26] A magnetic recording medium substrate made of the glass according to any one of [1] to [25].
[27] A magnetic recording medium including: the magnetic recording medium substrate according to [26]; and a magnetic recording layer.
[28] A glass spacer for a magnetic recording/reproducing device made of the glass according to any one of [1] to [25].
[29] A magnetic recording/reproducing device including at least one selected from the group consisting of the magnetic recording medium according to [27] and the glass spacer for a magnetic recording/reproducing device according to [28].

Another aspect of the present invention is as follows.
[1] A glass for a magnetic recording medium substrate or for a glass spacer for a magnetic recording/reproducing device (hereinafter referred to as a "glass 3-A"), the glass being an amorphous glass,
   wherein a B₂O₃ content is 0.10 mol% or more and 2.00 mol% or less,
   a Na₂O content is 1.00 mol% or more and 6.00 mol% or less,
   a CaO content is 0 mol% or more and 1.00 mol% or less, and
   a MgO content is 14.00 mol% or more.
[2] A glass for a magnetic recording medium substrate or for a glass spacer for a magnetic recording/reproducing device (hereinafter referred to as a "glass 3-B"), the glass being an amorphous glass,
   wherein a B₂O₃ content is 0.10 mol% or more and 2.00 mol% or less,
   a Na₂O content is 1.00 mol% or more and 6.00 mol% or less,
   a CaO content is 0 mol% or more and 1.00 mol% or less, and
   a total content of MgO, SrO, CaO, and BaO (MgO+SrO+CaO+BaO) is 14.00 mol% or more.
[3] The glass according to [1] or [2], wherein a mole ratio (Na₂O/(Li₂O+Na₂O+K₂O)) of the Na₂O content to a total content of Li₂O, Na₂O, and K₂O is 0.950 or more.
[4] The glass according to any one of [1] to [3], wherein the glass does not contain Li₂O or K₂O.
[5] The glass according to any one of [1] to [4], wherein a total content of SiO₂, B₂O₃, and Al₂O₃ (SiO₂+B₂O₃+Al₂O₃) is 70 mol% or more.
[6] The glass according to any one of [1] to [5], wherein a total content of SiO₂ and B₂O₃ (SiO₂+B₂O₃) is 58 mol% or more.
[7] The glass according to any one of [1] to [6], wherein a total content of SiO₂ and Al₂O₃ (SiO₂+Al₂O₃) is 70 mol% or more.
[8] The glass according to [1] or [2], wherein a mole ratio (Na₂O/(Li₂O+Na₂O+K₂O)) of the Na₂O content to a total content of Li₂O, Na₂O, and K₂O is 0.350 or more.
[9] The glass according to [1], [2], or [8], wherein the glass contains Li₂O.
[10] The glass according to [1], [2], [8], or [9], wherein a mole ratio (Li₂O/(Li₂O+Na₂O+K₂O)) of a Li₂O content to a total content of Li₂O, Na₂O, and K₂O is 0.600 or less.
[11] The glass according to any one of [1], [2], and [8] to [10], wherein a mole ratio (SiO₂/Na₂O) of a SiO₂ content to the Na₂O content is 50.0 or less.
[12] The glass according to any one of [1] to [7], wherein a mole ratio (Na₂O/MgO) of the Na₂O content to a MgO content is more than 0.080.
[13] The glass according to any one of [1] to [12], wherein a TiO₂ content is 4.00 mol% or less.
[14] The glass according to any one of [1] to [13], wherein a ZnO content is 10.00 mol% or less.
[15] The glass according to any one of [1] to [14], wherein a specific elastic modulus is 35.0 MNm/kg or more.
[16] The glass according to any one of [1] to [15], wherein a glass transition temperature is 700°C or more.
[17] A magnetic recording medium substrate made of the glass according to any one of [1] to [16].
[18] A magnetic recording medium including: the magnetic recording medium substrate according to [17]; and a magnetic recording layer.
[19] A glass spacer for a magnetic recording/reproducing device made of the glass according to any one of [1] to [16].
[20] A magnetic recording/reproducing device including at least one selected from the group consisting of the magnetic recording medium according to [18] and the glass spacer for a magnetic recording/reproducing device according to [19].

### Description of Embodiments

According to an aspect of the present invention, it is possible to provide a magnetic recording medium substrate made of glass suitable for molding performed with use of various molding methods.

Hereinafter, the glass 1-A, the glass 1-B, and the glass 1-C may also be collectively referred to as "the glass 1". The glass 3-A and the glass 3-B may also be collectively referred to as "the glass 3". The glass 4-A, the glass 4-B, and the glass 4-C may also be collectively referred to as "the glass 4".

In the following descriptions, descriptions relating to the glass 1 are also applicable to the glass 2, the glass 3, and the glass 4, descriptions relating to the glass 2 are also applicable to the glass 1, the glass 3, and the glass 4, and descriptions relating to the glass 3 are also applicable to the glass 1, the glass 2, and the glass 4 unless otherwise stated. The glass 1, the glass 2, the glass 3, and the glass 4 may also be collectively simply referred to as the "glass". A glass that corresponds to the glass 1 may also correspond to any one, two, or all of the glass 2, the glass 3, and the glass 4.

The glass 1, the glass 2, and the glass 3 are amorphous glass. Unlike crystallized glass, amorphous glass substantially does not contain a crystal phase and exhibits a glass transition phenomenon in response to an increase in temperature. On the other hand, the process for manufacturing crystallized glass is complicated. Furthermore, it is not easy to achieve high smoothness required for a magnetic recording medium substrate with crystallized glass.

The glass 1, the glass 2, and the glass 3 may also be amorphous oxide glass. Oxide glass is glass in which the main network-forming component is an oxide.

Hereinafter, the glass 1 to 4 will be described in more detail.

A glass composition is denoted by a glass composition based on oxides in the present invention and in this specification. Here, a "glass composition based on oxides" means a glass composition obtained by performing conversion such that all raw glass materials are decomposed in melting and are present as oxides in the glass. The glass composition is denoted on the basis of mole (mol%, mole ratio), unless otherwise specified.

The glass composition in the present invention and this specification can be obtained by, for example, a method such as ICP-AES (Inductively Coupled Plasma-Atomic Emission Spectrometry). ICP-AES is used for quantitative analysis, and the analysis is performed for each of elements. Then, analysis values are converted into expressions based on oxides. An analysis value obtained by means of ICP-AES may include, for example, a measurement error of approximately ±5% of the analysis value. Thus, a value based on oxide expression converted from an analysis value may also include an error of approximately ±5%.

Moreover, in the present invention and this specification, the fact that a constituent component is 0%, 0.0%, or 0.00% in content, or is not contained or not introduced means that the constituent component is substantially not contained, and that the content of the constituent component is at approximately equal to or less than a level of impurities. "Approximately equal to or less than a level of impurities" means, for example, less than 0.01%.

### [Glass 1, 4]

In the following description, descriptions relating to the glass 1-A are also applicable to the glass 1-B, the glass 1-C, and the glass 4, descriptions relating to the glass 1-B are also applicable to the glass 1-A, the glass 1-C, and the glass 4, and descriptions relating to the glass 1-C are also applicable to the glass 1-A, the glass 1-B, and the glass 4 unless otherwise stated.

The glass 1-A and the glass 1-B have a temperature T1 of 1600°C or less at a viscosity of 10^{2.0} dPa·s. The glass 1-C has a temperature T2 of 1500°C or less at a viscosity of 10^{2.5} dPa·s. In the present invention and this specification, the temperature T1 at the viscosity of 10^{2.0} dPa·s and the temperature T2 at the viscosity of 10^{2.5} dPa·s can be measured with use of a platinum ball pulling-up method or a rotation method. A glass whose temperature T1 is 1600°C or less and a glass whose temperature T2 is 1500°C or less are suitable for molding performed with use of various molding methods and thus are preferable. Examples of methods for molding molten glass include methods A to D described below in Examples, and the glass whose temperature T1 is 1600°C or less and the glass whose temperature T2 is 1500°C or less can be molded with any of the methods A to D, and are particularly preferably applied to molding performed with use of the method A or B.

The temperature T1 of the glass 1-A and the glass 1-B is 1600°C or less, preferably 1550°C or less, and more preferably 1500°C or less. The lower limit of the temperature T1 is not particularly limited, and may be 1300°C or more, 1350°C or more, 1400°C or more, or 1450°C or more, for example, but may also be lower than the temperatures listed here. In an embodiment, the temperature T1 of the glass 1-C may be within the above range.

The temperature T2 of the glass 1-C is 1500°C or less, preferably 1450°C or less, and more preferably 1400°C or less. The lower limit of the temperature T2 is not particularly limited, and may be 1200°C or more, 1250°C or more, 1300°C or more, or 1350°C or more, for example, but may also be lower than the temperatures listed here. In an embodiment, the temperature T2 of the glass 1-A and the temperature T2 of the glass 1-B may be within the above range.

The glass 4-A and the glass 4-B have a temperature T1 of 1700°C or less at the viscosity of 10^{2.0} dPa·s. The glass 4-C has a temperature T2 of 1560°C or less at the viscosity of 10^{2.5} dPa·s. A glass whose temperature T1 is 17000°C or less and a glass whose temperature T2 is 1560°C or less are suitable for molding performed with use of various molding methods and thus are preferable. Examples of methods for molding molten glass include the methods A to D described below in Examples, and the glass whose temperature T1 is 1700°C or less and the glass whose temperature T2 is 1560°C or less can be molded with any of the methods A to D, and are particularly preferably applied to molding performed with use of the method A or B.

The temperature T1 of the glass 4-A and the glass 4-B is 1700°C or less, preferably 1690°C or less, and more preferably 1680°C or less, 1670°C or less, 1660°C or less, 1650°C or less, or 1640°C or less in order of increasing preference. The lower limit of the temperature T1 is not particularly limited, and may be 1300°C or more, 1350°C or more, 1400°C or more, or 1450°C or more, for example, but may also be lower than the temperatures listed here. In an embodiment, the temperature T1 of the glass 4-C may be within the above range.

The temperature T2 of the glass 4-C is 1560°C or less, preferably 1550°C or less, and more preferably 1540°C or less, 1530°C or less, 1520°C or less, or 1510°C or less in order of increasing preference. The lower limit of the temperature T2 is not particularly limited, and may be 1200°C or more, 1250°C or more, 1300°C or more, or 1350°C or more, for example, but may also be lower than the temperatures listed here. In an embodiment, the temperature T2 of the glass 4-A and the temperature T2 of the glass 4-B may be within the above range.

In the glass 1-C and the glass 4-C, the total content of Li₂O and Na₂O (Li₂O+Na₂O) is 0.50% or more. The total content (Li₂O+Na₂O) of 0.50% or more is preferable from the viewpoint of reducing melt viscosity of the glass. A reduction in the melt viscosity can contribute to making the glass have a temperature T1 of 1670°C or less, or 1600°C or less. From this viewpoint, the total content (Li₂O+Na₂O) in the glass 1-C and the glass 4-C is preferably 1.00% or more, and more preferably 1.50% or more, 2.00% or more, 3.00% or more, or 3.50% or more in order of preference. Also, a reduction in the melt viscosity of the glass can contribute to making the glass have a temperature T2 of 1560°C or less, or 1500°C or less. Accordingly, a total content (Li₂O+Na₂O) within the above range is also preferable from the viewpoint of making the glass have a temperature T2 of 1500°C or less. The total content (Li₂O+Na₂O) in the glass 1-C and the glass 4-C may be 8.00% or less, 7.00% or less, or 6.00% or less, for example. In an embodiment, the total content (Li₂O+Na₂O) in the glass 1-A, the glass 1-B, the glass 4-A, and the glass 4-B may be within the above range.

In an embodiment, the total content of Li₂O, Na₂O, and K₂O (Li₂O+Na₂O+K₂O) in the glass 1-A, 1-B, 1-C, 4-A, 4-B, and 4-C may be more than 0.50%, 1.00% or more, 1.50% or more, 2.00% or more, 3.00% or more, or 3.50% or more. The total content (Li₂O+Na₂O+K₂O) in the glass 1-A, 1-B, 1-C, 4-A, 4-B, and 4-C may be 10.00% or less, 9.00% or less, 8.00% or less, 7.00% or less, or 6.00% or less, for example.

In an embodiment, a mole ratio (Li₂O/MgO) of the Li₂O content to the MgO content in the glass 1-A, 1-B, 1-C, 4-A, 4-B, and 4-C is preferably within a range described later about the glass 2. In another embodiment, a mole ratio (Na₂O/MgO) of the Na₂O content to the MgO content in the glass 1-A, 1-B, 1-C, 4-A, 4-B, and 4-C is preferably within a range described later about the glass 3.

The specific elastic modulus of the glass 1-A, 1-B, 4-A, and 4-B is 34.0 MNm/kg or more. A glass having a specific elastic modulus of 34.0 MNm/kg or more has high rigidity and is preferable as a glass for a magnetic recording medium substrate for the reasons described above. The specific elastic modulus of the glass 1-A, 1-B, 4-A, and 4-B is preferably 34.5 MNm/kg or more, and more preferably 35.0 MNm/kg or more, 35.5 MNm/kg or more, 36.0 MNm/kg or more, 36.5 MNm/kg or more, 37.0 MNm/kg or more, 37.5 MNm/kg or more, or 38.0 MNm/kg or more in order of increasing preference. The specific elastic modulus of the glass 1-A, 1-B, 4-A, and 4-B may be, for example, 45.0 MNm/kg or less, 44.0 MNm/kg or less, 43.0 MNm/kg or less, 42.0 MNm/kg or less, 41.0 MNm/kg or less, or 40.0 MNm/kg or less. However, a higher specific elastic modulus is more preferable because rigidity becomes higher, and thus the specific elastic modulus of the glass is not limited to the above-described values. In an embodiment, the specific elastic modulus of the glass 1-C and 4-C may be within the above range. As for glass compositions for increasing the rigidity, the following descriptions relating to the glass 2 and the following descriptions relating to the glass 3 can be referred to.

### [Glass 2]

### <Glass composition>

The glass 2 contains Li₂O as an essential component and CaO in a small amount of 0% or more and 1.00% or less, and the total content of Na₂O and K₂O, which are other alkali metal oxides, is 0% or more and 6.00% or less, and the B₂O₃ content is 0% or more and 10.00% or less. Such composition of the glass 2 can contribute to the ability of the glass 2 to exhibit high rigidity.

The CaO content in the glass 2 is 1.00% or less. The CaO content of 1.00% or less contributes to increasing the rigidity of the glass and can also contribute to improving thermal stability of the glass. From these viewpoints, the CaO content is preferably 0.9% or less, and more preferably 0.8% or less, 0.7% or less, 0.6% or less, 0.5% or less, 0.4% or less, 0.3% or less, 0.2% or less, or 0.1% or less in order of increasing preference, and may be 0%. It is further preferable that the glass 2 does not contain CaO.

The glass 2 contains Li₂O as an essential component, and the total content of Na₂O and K₂O (Na₂O+K₂O), which are other alkali metal oxides, is 0% or more and 6.00% or less. This can also contribute to increasing the rigidity of the glass. From the viewpoint of further increasing the rigidity of the glass, the total content of Na₂O and K₂O (Na₂O+K₂O) is preferably 5.00% or less, and more preferably 4.00% or less, 3.00% or less, 2.00% or less, 1.00% or less, 0.5% or less, or 0.1% or less in order of increasing preference, and may be 0%. In an embodiment, it is further preferable that the glass 2 does not contain Na₂O or K₂O, and it is even more preferable that the glass 2 does not contain any alkali metal oxides other than Li₂O. In another embodiment, the glass 2 may contain one or both of Na₂O and K₂O, and the total content (Na₂O+K₂O) may be 1.00% or more, 2.00% or more, or 3.00% or more.

The Li₂O content in the glass 2 is more than 0%, preferably 0.50% or more from the viewpoint of improving the thermal stability, and more preferably 1.00% or more, 2.00% or more, or 3.00% or more in order of increasing preference. The Li₂O content in the above range is also preferable from the viewpoint of maintaining the temperature required for melting the glass in an appropriate range. Maintaining the temperature required for melting the glass in an appropriate range is also preferable from the viewpoint of extending the service life of a melting furnace and reducing costs through a reduction in the input energy. On the other hand, from the viewpoint of further increasing the rigidity of the glass and improving devitrification resistance and/or increasing the glass transition temperature, the Li₂O content is preferably 10.00% or less, and more preferably 9.00% or less, 8.00% or less, 7.00% or less, 6.00% or less, 5.00% or less, or 4.00% or less in order of increasing preference.

From the viewpoint of improving chemical durability and the rigidity, the B₂O₃ content in the glass 2 is 10.00% or less, preferably 9.00% or less, and more preferably 8.00% or less, 7.00% or less, 6.00% or less, 5.00% or less, 4.00% or less, 3.00% or less, 2.00% or less, 1.00% or less, 0.70% or less, or 0.50% or less in order of increasing preference. A glass having high chemical durability is preferable because such a glass is highly resistant to acids and/or alkalis and accordingly, the surface of the glass is unlikely to be roughened through polishing, cleaning, and the like, and it is easy to make surface roughness of the glass small. Hereinafter, such a property of glass that makes it easy to realize small surface roughness through polishing will be referred to as a "low-roughness polishing property".

The B₂O₃ content in the glass 2 may be 0% or more, and is preferably more than 0%. The B₂O₃ content more than 0% can contribute to improving impact resistance. A glass having high impact resistance is preferable because cracks and/or chipping is unlikely to occur in processes such as cutting and grinding. From the viewpoint of improving the impact resistance, meltability, and the thermal stability, the B₂O₃ content in the glass 2 is more preferably 0.10% or more, and further preferably 0.20% or more. A glass having high thermal stability is preferable because such a glass is unlikely to devitrify.

In an embodiment, the glass 2 may contain one or both of SiO₂ and Al₂O₃.

From the viewpoint of improving the chemical durability, the SiO₂ content in the glass 2 is preferably 50.00% or more, and more preferably 51.00% or more, 52.00% or more, 53.00% or more, 54.00% or more, 55.00% or more, 56.00% or more, 57.00% or more, 58.00% or more, or 59.00% or more in order of increasing preference. From the viewpoint of further increasing the rigidity, the SiO₂ content is preferably 70.00% or less, and more preferably 69.00% or less, 68.00% or less, 67.00% or less, 66.00% or less, 65.00% or less, 64.00% or less, or 63.00% or less in order of increasing preference.

From the viewpoint of improving the thermal stability, the Al₂O₃ content in the glass 2 is preferably 20.00% or less, and more preferably 19.00% or less, 18.00% or less, 17.00% or less, 16.00% or less, 15.00% or less, or 14.00% or less in order of increasing preference. The Al₂O₃ content in the above range is also preferable from the viewpoint of maintaining the temperature required for melting the glass in an appropriate range. On the other hand, from the viewpoint of further increasing the rigidity, the Al₂O₃ content is preferably 10.00% or more, and more preferably 11.00% or more.

With regard to alkaline earth metal oxides, the CaO content in the glass 2 is as described above. In an embodiment, the glass 2 may contain one or more alkaline earth metal oxides. Specific examples of alkaline earth metal oxides that may be contained in the glass 2 include MgO, SrO, and BaO. In an embodiment, the glass 2 may contain MgO. From the viewpoint of further increasing the rigidity, the MgO content in the glass 2 is preferably 10.00% or more, and more preferably 11.00% or more, 12.00% or more, 13.00% or more, 14.00% or more, 15.00% or more, 16.00% or more, 17.00% or more, 18.00% or more, 19.00% or more, or 20.00% or more in order of increasing preference. From the viewpoint of improving devitrification resistance of the glass, the MgO content is preferably 28.00% or less, and more preferably 27.00% or less, 26.00% or less, 25.00% or less, 24.00% or less, 23.00% or less, 22.00% or less, 21.00% or less, 20.00% or less, 19.00% or less, or 18.00% or less in order of increasing preference.

From the viewpoint of reducing the melt viscosity, reducing the liquidus temperature, and improving the low-roughness polishing property of the glass, a mole ratio (Li₂O/MgO) of the Li₂O content to the MgO content is preferably 0.020 or more, and more preferably 0.030 or more, 0.040 or more, 0.050 or more, 0.060 or more, 0.070 or more, 0.080 or more, or more than 0.080 in order of increasing preference. A glass having a low liquidus temperature has high thermal stability and thus is preferable. Also, the mole ratio (Li₂O/MgO) of more than 0.080 can contribute to reducing the specific resistance of the glass melt. In a case where electricity is passed through glass to heat and melt the glass, a glass having a low specific resistance is preferable because it is possible to melt the glass while reducing the temperature in a furnace when electricity is passed through the glass to heat the glass. From this viewpoint, the mole ratio (Li₂O/MgO) is more preferably 0.090 or more, and even more preferably 0.100 or more, 0.110 or more, 0.120 or more, 0.130 or more, 0.140 or more, 0.150 or more, or 0.160 or more in order of increasing preference. On the other hand, from the viewpoint of increasing the glass transition temperature and the specific elastic modulus, the mole ratio (Li₂O/MgO) is preferably less than 0.240, and more preferably 0.230 or less, 0.220 or less, 0.210 or less, 0.200 or less, 0.190 or less, or 0.180 or less in order of increasing preference.

From the viewpoint of reducing the melt viscosity, reducing the liquidus temperature, improving the low-roughness polishing property, and reducing the specific resistance of the glass melt, a mole ratio (Li₂O/(Li₂O+MgO)) of the Li₂O content to the total content of Li₂O and MgO is preferably 0.020 or more, and more preferably 0.030 or more, 0.040 or more, 0.050 or more, 0.060 or more, 0.070 or more, 0.080 or more, more than 0.080, 0.090 or more, 0.100 or more, 0.110 or more, 0.120 or more, 0.130 or more, or 0.140 or more in order of increasing preference. On the other hand, from the viewpoint of increasing the glass transition temperature and the specific elastic modulus, the mole ratio (Li₂O/(Li₂O+MgO)) is preferably less than 0.190, for example, and more preferably 0.180 or less, 0.170 or less, or 0.160 or less in order of increasing preference.

From the viewpoint of improving the thermal stability, a mole ratio (Al₂O₃/SiO₂) of the Al₂O₃ content to the SiO₂ content is preferably less than 0.270, and more preferably 0.260 or less, 0.250 or less, 0.240 or less, 0.230 or less, or 0.220 or less in order of increasing preference. On the other hand, from the viewpoint of increasing the specific elastic modulus, the mole ratio (Al₂O₃/SiO₂) is preferably 0.100 or more, and more preferably 0.120 or more, 0.130 or more, 0.140 or more, 0.150 or more, 0.160 or more, 0.170 or more, or 0.190 or more in order of increasing preference.

From the viewpoint of improving the impact resistance, a mole ratio (B₂O₃/SiO₂) of the B₂O₃ content to the SiO₂ content is preferably more than 0, and more preferably 0.001 or more, 0.002 or more, 0.003 or more, or 0.004 or more in order of increasing preference. On the other hand, from the viewpoint of improving the chemical durability and suppressing volatilization of glass components when the glass is molten, the mole ratio (B₂O₃/SiO₂) is preferably less than 0.020, and more preferably 0.015 or less, 0.010 or less, 0.009 or less, 0.008 or less, or 0.007 or less in order of increasing preference.

From the viewpoint of improving the impact resistance, a mole ratio (B₂O₃/(B₂O₃+SiO₂)) of the B₂O₃ content to the total content of B₂O₃ and SiO₂ is preferably more than 0, and more preferably 0.001 or more, 0.002 or more, 0.003 or more, or 0.004 or more in order of increasing preference. On the other hand, from the viewpoint of improving the chemical durability and suppressing volatilization of glass components when the glass is molten, the mole ratio (B₂O₃/(B₂O₃+SiO₂)) is preferably less than 0.020, and more preferably 0.015 or less, 0.010 or less, 0.009 or less, 0.008 or less, or 0.007 or less in order of increasing preference.

From the viewpoint of improving the impact resistance, a mole ratio (B₂O₃/(B₂O₃+SiO₂+Al₂O₃)) of the B₂O₃ content to the total content of B₂O₃, SiO₂, and Al₂O₃ is preferably more than 0, and more preferably 0.001 or more, 0.002 or more, or 0.003 or more in order of increasing preference. On the other hand, from the viewpoint of improving the chemical durability and suppressing volatilization of glass components when the glass is molten, the mole ratio (B₂O₃/(B₂O₃+SiO₂+Al₂O₃)) is preferably less than 0.010, and more preferably 0.009 or less, 0.008 or less, 0.007 or less, or 0.006 or less in order of increasing preference.

A mole ratio (MgO/(MgO+CaO+SrO+BaO)) of the MgO content to the total content of MgO, CaO, SrO, and BaO may be 1.000, 1.000 or less, or less than 1.000. MgO has a specific gravity smaller than specific gravities of other alkaline earth metal oxides, and accordingly, can contribute to increasing the specific elastic modulus. The glass transition temperature of a common glass tends to increase when an alkaline earth metal oxide having a large specific gravity is added. In contrast, in studies carried out by the inventors of the present application, there was a tendency that the glass transition temperature of the glass 2 decreased when an alkaline earth metal oxide whose specific gravity is larger than the specific gravity of MgO was added. From the viewpoint of increasing the specific elastic modulus and the glass transition temperature of the above-described glass, the mole ratio (MgO/(MgO+CaO+SrO+BaO)) is preferably 0.970 or more, and more preferably 0.980 or more, 0.990 or more, or 1.000 or more in order of increasing preference.

A mole ratio (Li₂O/(Li₂O+Na₂O+K₂O)) of the Li₂O content to the total content of Li₂O, Na₂O, and K₂O may be 1.000, 1.000 or less, or less than 1.000. In an embodiment, from the viewpoint of increasing the specific elastic modulus, the mole ratio (Li₂O/(Li₂O+Na₂O+K₂O)) is preferably 0.760 or more, and more preferably 0.800 or more, 0.850 or more, 0.900 or more, 0.950 or more, or 1.000 in order of increasing preference. In another embodiment, the mole ratio (Li₂O/(Li₂O+Na₂O+K₂O)) may be less than 0.760, 0.700 or less, 0.600 or less, 0.500 or less, or 0.300 or less, and may be 0.050 or more, or 0.100 or more.

From the viewpoint of improving the impact resistance, a mole ratio (B₂O₃/Li₂O) of the B₂O₃ content to the Li₂O content is preferably more than 0, and more preferably 0.010 or more, 0.015 or more, 0.020 or more, 0.025 or more, 0.030 or more, 0.035 or more, 0.040 or more, 0.045 or more, 0.050 or more, 0.055 or more, 0.060 or more, 0.065 or more, or 0.070 or more in order of increasing preference. On the other hand, from the viewpoint of improving the chemical durability, suppressing devitrification, and suppressing a reduction in the homogeneity due to a change in the composition, the mole ratio (B₂O₃/Li₂O) is preferably 0.700 or less, and more preferably 0.600 or less, 0.500 or less, 0.400 or less, 0.300 or less, 0.250 or less, less than 0.250, 0.245 or less, 0.240 or less, 0.235 or less, 0.230 or less, 0.225 or less, 0.220 or less, 0.215 or less, 0.210 or less, 0.205 or less, or 0.200 or less in order of preference.

The Fe₂O₃ content in the glass 2 expressed as an outer percentage may be 1 mol% or less, 0.7 mol% or less, 0.5 mol% or less, 0.4 mol% or less, 0.3 mol% or less, 0.1 mol% or less, 0.07 mol% or less, 0.05 mol% or less, 0.04 mol% or less, 0.03 mol% or less, or 0.02 mol% or less. Note that the Fe₂O₃ content is expressed as an outer percentage. That is, the Fe₂O₃ content is represented by a mole percentage of the amount of Fe₂O₃ contained in the glass with respect to 100% where the total content of the glass components other than Fe₂O₃ (the total content of the glass components and additives when the glass contains additives in addition to the glass components) is 100%. In an embodiment, the glass 2 may contain no Fe (the Fe₂O₃ content expressed as the above-described outer percentage may be 0 mol%).

The glass 2 may also contain one or more metals selected from the group consisting of Zr, Y, La, Ti, Hf, Cu, Co, Mn, Nd, Pr, Nb, V, Cr, Ni, Mo, Ho, and Er or an oxide thereof, and may contain none of them. When a glass composition based on oxides contains an oxide of one or more metals selected from the group consisting of Zr, Y, La, Ti, Hf, Cu, Co, Mn, Nd, Pr, Nb, V, Cr, Ni, Mo, Ho, and Er, the thermal stability of the glass tends to increase. In an embodiment, the content of an oxide of one or more metals selected from the group consisting of Zr, Y, La, Ti, Hf, Cu, Co, Mn, Nd, Pr, Nb, V, Cr, Ni, Mo, Ho, and Er (the total content thereof when oxides of a plurality of metals are contained) may be 0%, 0% or more, or more than 0%, and may be 5.00% or less, 4.00% or less, 3.00% or less, 2.00% or less, 1.00% or less, 0.5% or less, or 0.1% or less. For example, the Y₂O₃ content may be 0% or more, or more than 0%, and may be 3.00% or less, 2.00% or less, or 1.00% or less. The TiO₂ content may be 0% or more, or more than 0%, and may be 3.00% or less, 2.00% or less, or 1.00% or less. In an embodiment, the glass 2 may contain one or both of Y₂O₃ and TiO₂.

F is a component that easily volatilizes when glass melts and also causes striae, and thus it is preferable that the glass 2 does not contain F. It is preferable that the glass 2 does not contain F from the viewpoint of suppressing erosion of a melting furnace, suppressing a reduction in the Young's modulus, and suppressing a reduction in the specific elastic modulus as well.

Pb, Cd, and As are substances that adversely affect the environment, and thus the introduction of these substances is preferably avoided.

From the viewpoint of obtaining a clarifying effect, the glass 2 may contain at least one selected from the group consisting of SnO₂, CeO₂, and Sb₂O₃. In an embodiment, the total content of SnO₂ and CeO₂ may be 0%. In another embodiment, the glass 2 may contain SnO₂ and/or CeO₂, and the total content of SnO₂ and CeO₂ (SnO₂+CeO₂) is preferably 0.05% to 2%. When the total content of SnO₂ and CeO₂ is 0.05% or more, a sufficient clarifying effect can be obtained, and residual bubbles can be reduced. Also, when the total content (SnO₂+CeO₂) is 2% or less, it is possible to prevent a reduction in the productivity due to molten glass blowing up while the glass is molten. The lower limit of the total content (SnO₂+CeO₂) is preferably 0.10% or more, more preferably 0.20% or more, even more preferably 0.25% or more, further preferably 0.30% or more, still more preferably 0.35% or more, and yet more preferably 0.40% or more. Also, the upper limit of the total content (SnO₂+CeO₂) is preferably 1.5% or less, more preferably 1.2% or less, even more preferably 1.0% or less, further preferably 0.70% or less, still more preferably 0.65% or less, yet more preferably 0.60% or less, further more preferably 0.55% or less, and still further preferably 0.50% or less.

SnO₂ serves to promote clarification in a state where the melting temperature of the glass is comparatively high (a temperature range of approximately 1400°C to 1600°C). In a circumstance where the use of a clarifying agent that adversely affects the environment, such as Sb₂O₃ or arsenious acid, is limited, in an embodiment, the introduction of SnO₂ into the glass 2 is preferable for removing bubbles in the glass having a high melting temperature. From the viewpoint of obtaining a clarifying effect, the SnO₂ content is preferably 0.01% or more, more preferably 0.05% or more, even more preferably 0.10% or more, further preferably 0.15% or more, and still more preferably 0.20% or more. Also, the SnO₂ content is preferably 2% or less, more preferably 1.5% or less, even more preferably 1.0% or less, further preferably 0.8% or less, and still more preferably 0.5% or less.

CeO₂ is a component that exhibits a glass clarification action as is the case for SnO₂. CeO₂ serves to take in oxygen and fix it as a glass component in a state where the melting temperature of the glass is comparatively low (a temperature range approximately from 1200°C to 1400°C), and accordingly, in an embodiment, it is preferable to introduce CeO₂ as a clarifying agent into the glass 2. From the viewpoint of obtaining a clarifying effect, the CeO₂ content is preferably 0.01% or more, more preferably 0.05% or more, even more preferably 0.08% or more, and further preferably 0.10% or more. Also, the CeO₂ content is preferably 2% or less, more preferably 1.5% or less, even more preferably 1.0% or less, further preferably 0.8% or less, still more preferably 0.5% or less, and yet more preferably 0.3% or less. When SnO₂ and CeO₂ are allowed to coexist, a clarification action can be obtained in a wide temperature range, and thus, in an embodiment, the glass 2 preferably contains both SnO₂ and CeO₂.

From the viewpoint of reducing environmental burdens, it is desirable to refrain from using Sb₂O₃. The Sb₂O₃ content in the glass 2 is preferably in the range of 0% to 0.5%. The Sb₂O₃ content is more preferably 0.3% or less, even more preferably 0.1% or less, further preferably 0.05% or less, and still more preferably 0.02% or less, and particularly preferably Sb₂O₃ is not contained.

The glass 2 can be manufactured by weighing and blending raw glass materials such as oxides, carbonates, nitrates, sulfates, and hydroxides so as to give a predetermined glass composition, by sufficiently mixing these materials, heating and melting the mixture within a range of, for example, 1400°C to 1600°C in a melting vessel, and by molding homogenized molten glass that has been subjected to clarification and stirring to cause sufficient bubble separation. For example, it is preferable to heat and melt raw glass materials in a melting tank at 1400°C to 1550°C, to raise the temperature of the obtained molten glass in a clarification tank and keep the glass at 1450°C to 1600°C, and after that to lower the temperature and cause glass to flow out at 1200°C to 1400°C to be molded.

### <Glass physical properties>

As a result of performing the above-described composition adjustment, the glass 2 can have various glass physical properties described below.

### (Specific elastic modulus)

The glass 2 can have high rigidity due to having the composition described above. One example of an indicator related to the rigidity of glass is the specific elastic modulus. The specific elastic modulus is calculated by dividing the Young's modulus of glass by the density thereof. Here, the density can be considered as a value obtained by giving the unit g/cm³ to the specific gravity of glass. The specific elastic modulus of the glass 2 is preferably 35.0 MNm/kg or more, and more preferably 35.5 MNm/kg or more, 36.0 MNm/kg or more, 36.5 MNm/kg or more, 37.0 MNm/kg or more, 37.5 MNm/kg or more, or 38.0 MNm/kg or more in order of increasing preference. The specific elastic modulus may be, for example, 45.0 MNm/kg or less, 44.0 MNm/kg or less, 43.0 MNm/kg or less, 42.0 MNm/kg or less, 41.0 MNm/kg or less, or 40.0 MNm/kg or less. However, a higher specific elastic modulus is more preferable because rigidity becomes higher, and thus the specific elastic modulus of the glass 2 is not limited to the above-described values.

### (Young's modulus E)

One example of an indicator related to the rigidity of glass is the Young's modulus. The Young's modulus of the glass 2 is preferably 86.0 GPa or more, more preferably 87.0 GPa or more, and even more preferably 88.0 GPa or more, 89.0 GPa or more, 90.0 GPa or more, 91.0 GPa or more, 92.0 GPa or more, 93.0 GPa or more, 94.0 GPa or more, or 95.0 GPa or more in order of increasing preference. The Young's modulus of the glass 2 may be 120.0 GPa or less, or 110.0 GPa or less, for example. However, a higher Young's modulus is more preferable because rigidity becomes higher, and thus the Young's modulus of the glass 2 is not limited to the above-described values.

### (Specific gravity d)

Reducing the specific gravity of a glass for a magnetic recording medium substrate makes it possible to reduce the weight of a magnetic recording medium substrate and furthermore the weight of a magnetic recording medium, and consequently enables suppression of the power consumption of an HDD. The specific gravity of the glass 2 is preferably 2.80 or less, more preferably 2.75 or less, even more preferably 2.70 or less, further preferably 2.65 or less, and still more preferably 2.60 or less. The specific gravity of the glass 2 may be 2.40 or more, for example. However, a lower specific gravity is more preferable, and thus the specific gravity of the glass 2 is not limited to the above-described values.

### (Glass transition temperature Tg)

Magnetic recording medium substrates are usually subjected to high temperature treatment in a step for forming a magnetic recording layer on a substrate. In order to form a magnetic recording layer containing a magnetic material with high magnetic anisotropy energy, which has been developed recently for high-density recording with a magnetic recording medium for example, usually, film formation is performed at a high temperature, or heat treatment is performed at a high temperature after film formation. It is preferable that a magnetic recording medium substrate has heat resistance capable of withstanding such high temperature treatment, in order to prevent flatness of the substrate from being impaired due to the substrate being exposed to a high temperature. With respect to this point, the glass 2 can also exhibit high heat resistance due to having the glass composition described above. The glass transition temperature Tg of the glass 2, which is an indicator of heat resistance, may be 550°C or more, for example, and is preferably 600°C or more, and more preferably 610°C or more, 620°C or more, 630°C or more, 640°C or more, 650°C or more, 660°C or more, 670°C or more, 680°C or more, 690°C or more, 700°C or more, 710°C or more, 720°C or more, 730°C or more, 740°C or more, or 750°C or more in order of increasing preference. Also, the Tg of the glass 2 may be, for example, 850°C or less, 830°C or less, 810°C or less, 790°C or less, 770°C or less, or 750°C or less. However, a higher Tg is more preferable from the viewpoint of heat resistance, and thus the Tg of the glass 2 is not limited to the above-described values.

### (Thermal expansion coefficient)

An HDD with a built-in magnetic recording medium usually has a structure in which the center portion is pressed down by a spindle of a spindle motor and a clamp, and the magnetic recording medium itself is rotated. Thus, when there is a large difference between respective thermal expansion coefficients of a magnetic recording medium substrate and a spindle material constituting the spindle portion, deviation occurs during use between thermal expansion/thermal contraction of the spindle and thermal expansion/thermal contraction of the magnetic recording medium substrate relative to ambient temperature changes. As a result, a phenomenon in which the magnetic recording medium deforms will occur. When such a phenomenon occurs, a head cannot read written information, causing deterioration of the reliability of recording/reproduction. Therefore, it is desirable to avoid an excessively large difference between the thermal expansion coefficient of the glass for a magnetic recording medium substrate and the thermal expansion coefficient of the spindle material (e.g., stainless steel). Generally, a spindle material for an HDD has an average linear expansion coefficient (thermal expansion coefficient) of 70×10⁻⁷/°C or more within a temperature range of 100°C to 300°C, and in a case where the average linear expansion coefficient of a glass for a magnetic recording medium substrate at 100°C to 300°C is 30.0×10⁻⁷/°C or more, the difference between the thermal expansion coefficient of the glass and that of the spindle material is small, and thus the glass for a magnetic recording medium substrate can contribute to improving the reliability of the magnetic recording medium. On the other hand, if the thermal expansion coefficient of the glass substrate is too high, the substrate may crack when heated in film formation. The average linear expansion coefficient α of the glass 2 at 100°C to 300°C is preferably 34.0×10⁻⁷/°C or more, and more preferably 35.0×10⁻⁷/°C or more, 36.0×10⁻⁷/°C or more, 37.0×10⁻⁷/°C or more, 38.0×10⁻⁷/°C or more, 39.0×10⁻⁷/°C or more, or 40.0×10⁻⁷/°C or more in order of increasing preference. Also, the average linear expansion coefficient α of the glass 2 at 100°C to 300°C is preferably 70.0×10⁻⁷/°C or less, and more preferably 68.0×10⁻⁷/°C or less, 65.0×10⁻⁷/°C or less, 63.0×10⁻⁷/°C or less, 60.0×10⁻⁷/°C or less, 57.0×10⁻⁷/°C or less, 55.0×10⁻⁷/°C or less, or 50.0×10⁻⁷/°C or less in order of increasing preference.

### (Liquidus temperature LT)

One example of an indicator for the thermal stability of glass is the liquidus temperature (LT). The LT of the glass 2 is preferably 1330°C or less, more preferably 1320°C or less, and further preferably 1310°C or less, 1300°C or less, 1290°C or less, 1280°C or less, 1270°C or less, 1260°C or less, 1250°C or less, or 1240°C or less in order of increasing preference. A glass having a low liquidus temperature LT is preferable because such a glass is unlikely to devitrify. The lower limit of the LT may be 800°C or more, for example, but is not particularly limited.

The various physical properties described above and various physical properties described below can be obtained using methods described later regarding Examples.

### [Glass 3]

### <Glass composition>

From the viewpoint of improving the chemical durability and rigidity, the B₂O₃ content in the glass 3 is 2.00% or less, preferably 1.80% or less, and more preferably 1.50% or less, 1.20% or less, 1.00% or less, 0.80% or less, 0.70% or less, 0.60% or less, 0.50% or less, or 0.40% or less in order of increasing preference. A glass having high chemical durability is preferable for the reasons described above. From the viewpoint of improving the impact resistance, meltability, and thermal stability, the B₂O₃ content in the glass 3 is 0.10% or more, and preferably 0.20% or more. As described above, a glass having high impact resistance is preferable because cracks and/or chipping is unlikely to occur in processes such as cutting and grinding. Also, a glass having high thermal stability is preferable because such a glass is unlikely to devitrify.

In an embodiment, the glass 3 may contain one or both of SiO₂ and Al₂O₃.

From the viewpoint of improving the chemical durability, the SiO₂ content in the glass 3 is preferably 50.00% or more, and more preferably 51.00% or more, 52.00% or more, 53.00% or more, 54.00% or more, 55.00% or more, 56.00% or more, 57.00% or more, 58.00% or more, 59.00% or more, 60.00% or more, 61.00% or more, 62.00% or more, 63.00% or more, or 64.00% or more in order of increasing preference. A glass having high chemical durability is preferable because the surface of the glass is unlikely to be roughened through polishing and cleaning. On the other hand, from the viewpoint of further increasing the rigidity, the SiO₂ content is preferably 75.00% or less, and more preferably 74.00% or less, 73.0% or less, 72.0% or less, 71.0% or less, 70.0% or less, 69.0% or less, 68.0% or less, 67.0% or less, 66.0% or less, 65.00% or less, 64.00% or less, 63.00% or less, 62.00% or less, or 61.00% or less in order of increasing preference.

From the viewpoint of improving the thermal stability, the Al₂O₃ content in the glass 3 is preferably 20.00% or less, and more preferably 19.00% or less, 18.00% or less, 17.00% or less, or 16.00% or less in order of increasing preference. The Al₂O₃ content in the above range is also preferable from the viewpoint of maintaining the temperature required for melting the glass in an appropriate range. On the other hand, from the viewpoint of further increasing the rigidity, the Al₂O₃ content is preferably 10.00% or more, and more preferably 11.00% or more, 12.00% or more, or 13.00% or more in order of increasing preference.

From the viewpoint of improving the thermal stability of the glass, the total content of SiO₂, B₂O₃, and Al₂O₃ (SiO₂+B₂O₃+Al₂O₃) in the glass 3 is preferably 70.00% or more, and more preferably 71.00% or more, 72.00% or more, 73.00% or more, 74.00% or more, 75.00% or more, 76.00% or more, 77.00% or more, 78.00% or more, or 79.00% or more in order of increasing preference. From the viewpoint of further improving meltability, the total content of SiO₂, B₂O₃, and Al₂O₃ (SiO₂+B₂O₃+Al₂O₃) in the glass 3 is preferably 85.00% or less, and more preferably 84.00% or less, 83.00% or less, 82.00% or less, 81.00% or less, 80.00% or less, 79.00% or less, 78.00% or less, 77.00% or less, 76.00% or less, 75.00% or less, or 74.00% or less in order of increasing preference.

From the viewpoint of improving the thermal stability of the glass, the total content of SiO₂ and B₂O₃ (SiO₂+B₂O₃) is preferably 58.00% or more, and more preferably 59.00% or more, 60.00% or more, 61.00% or more, 62.00% or more, 63.00% or more, or 64.00% or more in order of increasing preference. From the viewpoint of further increasing the rigidity, the total content of SiO₂ and B₂O₃ (SiO₂+B₂O₃) in the glass 3 is preferably 77.00% or less, and more preferably 76.00% or less, 75.00% or less, 74.00% or less, 73.00% or less, 72.00% or less, 71.00% or less, 70.00% or less, 69.00% or less, 68.00% or less, 67.00% or less, 66.00% or less, 65.00% or less, 64.00% or less, 63.00% or less, or 62.00% or less in order of increasing preference.

From the viewpoint of the chemical durability, such as resistance to acids and resistance to alkalis, the total content of SiO₂ and Al₂O₃ (SiO₂+Al₂O₃) in the glass 3 is preferably 70.00% or more, and more preferably 71.00% or more, 72.00% or more, 73.00% or more, 74.00% or more, 75.00% or more, 76.00% or more, 77.00% or more, 78.00% or more, or 79.00% or more in order of increasing preference. From the viewpoint of meltability of the glass, the total content of SiO₂ and Al₂O₃ (SiO₂+Al₂O₃) in the glass 3 is preferably 85.00% or less, and more preferably 84.00% or less, 83.00% or less, 82.00% or less, 81.00% or less, 80.00% or less, 79.00% or less, 78.00% or less, 77.00% or less, 76.00% or less, 75.00% or less, or 74.00% or less in order of increasing preference.

The glass 3 contains Na₂O as an essential component. Na₂O is a component that exhibits various actions such as increasing the specific elastic modulus of the glass, improving the meltability, increasing the thermal expansion coefficient, and reducing the viscosity of the glass during clarification to promote bubble separation. Also, including Na₂O among alkali metal oxides in the glass can contribute to increasing the glass transition temperature, when compared with a case where Li₂O in the same amount as Na₂O is added to the glass. The Na₂O content in the glass 3 is 1.00% or more, preferably 1.50% or more, and more preferably 2.00% or more, 2.50% or more, or 3.00% or more in order of increasing preference. From the viewpoint of increasing the glass transition temperature, the Na₂O content in the glass 3 is 6.00% or less, preferably 5.50% or less, and more preferably 5.00% or less, 4.50% or less, or 4.00% or less in order of increasing preference.

From the viewpoint of improving water resistance of the glass, a mole ratio (SiO₂/Na₂O) of the SiO₂ content to the Na₂O content in the glass 3 is preferably 12.0 or more, and more preferably 15.0 or more, 16.0 or more, 17.0 or more, or 18.0 or more in order of increasing preference. The glass having excellent water resistance is preferable from the viewpoint of suppressing impairment of the smoothness of the surface of the glass (i.e., an increase in the surface roughness) when the surface of the glass that has been polished to be extremely smooth comes into contact with water during cleaning or the like, for example. The smaller the surface roughness of the glass, the better the orientation of magnetic particles, and the easier it is to reduce the distance between a magnetic head and the magnetic recording medium (the floating amount of the magnetic head), which is preferable. On the other hand, from the viewpoint of improving meltability of the glass, the mole ratio (SiO₂/Na₂O) is preferably 50.0 or less, more preferably 40.0 or less, and further preferably 30.0 or less.

The glass 3 may also contain alkali metal oxides other than Na₂O.

Li₂O is a component that acts similarly to Na₂O described above, but the glass transition temperature is more easily reduced by Li₂O when compared with a case where Na₂O in the same amount as Li₂O is added to the glass, as described above. The Li₂O content in the glass 3 may be, for example, 6.00% or less, 5.00% or less, 4.00% or less, 3.00% or less, 2.00% or less, 1.50% or less, 1.00% or less, 0.50% or less, or 0.10% or less. The Li₂O content in the glass 3 may be 0%, 0% or more, or more than 0%. In an embodiment, the glass 3 may be a glass that does not contain Li₂O.

K₂O is a component that acts similarly to Na₂O described above, but K₂O has a specific gravity larger than the specific gravity of Na₂O, and accordingly, the specific elastic modulus is more easily reduced by K₂O when compared with a case where Na₂O in the same amount as K₂O is added to the glass. The K₂O content in the glass 3 may be, for example, 6.00% or less, 5.00% or less, 4.00% or less, 3.00% or less, 2.00% or less, 1.50% or less, 1.00% or less, 0.50% or less, or 0.10% or less. The K₂O content in the glass 3 may be 0%, 0% or more, or more than 0%. In an embodiment, the glass 3 may be a glass that does not contain K₂O. In another embodiment, the glass 3 may be a glass that contains K₂O, e.g., a glass that contains K₂O in an amount of 0.10% or more.

From the viewpoint of increasing the glass transition temperature and the specific elastic modulus, a mole ratio (Na₂O/(Li₂O+Na₂O+K₂O)) of the Na₂O content to the total content of Li₂O, Na₂O, and K₂O in the glass 3 is preferably 0.350 or more, and more preferably 0.400 or more, 0.450 or more, 0.500 or more, 0.550 or more, 0.600 or more, 0.650 or more, 0.700 or more, 0.750 or more, 0.800 or more, 0.850 or more, 0.900 or more, 0.950 or more, 0.960 or more, 0.970 or more, 0.980 or more, or 0.990 or more in order of increasing preference. The mole ratio (Na₂O/(Li₂O+Na₂O+K₂O)) in the glass 3 may be 1.000, 1.000 or less, or less than 1.000. In an embodiment, the glass 3 may be a glass that does not contain Li₂O or K₂O. Also, from the viewpoint of improving the water resistance of the glass and reducing the surface roughness of the glass, the mole ratio (Na₂O/(Li₂O+Na₂O+K₂O)) is preferably less than 1.000, and more preferably 0.950 or less, or 0.900 or less in order of increasing preference.

From the viewpoint of improving the water resistance of the glass, a mole ratio (Li₂O/(Li₂O+Na₂O+K₂O)) of the Li₂O content to the total content of Li₂O, Na₂O, and K₂O in the above glass is preferably 0.050 or more, and more preferably 0.100 or more. On the other hand, from the viewpoint of suppressing a reduction in the glass transition temperature, the mole ratio (Li₂O/(Li₂O+Na₂O+K₂O)) is preferably 0.600 or less, and more preferably 0.500 or less, 0.400 or less, or 0.300 or less in order of increasing preference.

The CaO content in the glass 3 is 1.00% or less. The CaO content of 1.00% or less contributes to increasing the specific elastic modulus and the glass transition temperature of the glass and can also contribute to improving the thermal stability of the glass. From these viewpoints, the CaO content is preferably 0.90% or less, and more preferably 0.80% or less, 0.70% or less, 0.60% or less, 0.50% or less, 0.40% or less, 0.30% or less, 0.20% or less, or 0.10% or less in order of increasing preference. The CaO content in the glass 3 may be 0%, 0% or more, or more than 0%. In an embodiment, it is preferable that the glass 3 does not contain CaO.

With regard to alkaline earth metal oxides, the CaO content in the glass 3 is as described above. In an embodiment, the glass 3 may contain one or more alkaline earth metal oxides. Specific examples of alkaline earth metal oxides that may be contained in the glass 3 include MgO, SrO, and BaO. The glass 3-A contains MgO. From the viewpoint of increasing the rigidity, the MgO content in the glass 3-A is 14.00% or more, preferably 14.50% or more, and more preferably 15.00% or more, 15.50% or more, or 16.00% or more in order of increasing preference. From the viewpoint of improving devitrification resistance of the glass, the MgO content in the glass 3-A is preferably 28.00% or less, and more preferably 27.00% or less, 26.00% or less, 25.00% or less, 24.00% or less, 23.00% or less, 22.00% or less, 21.00% or less, 20.00% or less, 19.00% or less, or 18.00% or less in order of increasing preference. The glass 3-B may contain MgO. With regard to the MgO content in the glass 3-B, the descriptions relating to the MgO content in the glass 3-A can be referred to.

From the viewpoint of increasing the rigidity, the total content of MgO, SrO, CaO, and BaO (MgO+SrO+CaO+BaO) in the glass 3-B is 14.00 mol% or more, preferably 14.50% or more, and more preferably 15.00% or more, 15.50% or more, or 16.00% or more in order of increasing preference. From the viewpoint of improving devitrification resistance of the glass, the total content of MgO, SrO, CaO, and BaO (MgO+SrO+CaO+BaO) in the glass 3-B is preferably 28.00% or less, and more preferably 27.00% or less, 26.00% or less, 25.00% or less, 24.00% or less, 23.00% or less, 22.00% or less, 21.00% or less, 20.00% or less, 19.00% or less, or 18.00% or less in order of increasing preference. With regard to the total content of MgO, SrO, CaO, and BaO (MgO+SrO+CaO+BaO) in the glass 3-A, the descriptions relating to the total content of MgO, SrO, CaO, and BaO (MgO+SrO+CaO+BaO) in the glass 3-B can be referred to.

From the viewpoint of reducing the specific gravity and raw material costs, the SrO content in the glass 3 is preferably 4.00% or less, and more preferably 3.00% or less, 2.00% or less, 1.00% or less, or 0.50% or less in order of increasing preference. In an embodiment, the SrO content in the glass 3 may be 0%, 0% or more, or more than 0%.

From the viewpoint of reducing the specific gravity, increasing the Young's modulus, and increasing the specific elastic modulus of the glass, the BaO content in the glass 3 is preferably 3.00% or less, and more preferably 2.00% or less, 1.00% or less, or 0.50% or less in order of increasing preference. In an embodiment, the BaO content in the glass 3 may be 0%, 0% or more, or more than 0%.

A mole ratio (MgO/(MgO+CaO+SrO+BaO)) of the MgO content to the total content of MgO, CaO, SrO, and BaO may be 1.000, 1.000 or less, or less than 1.000. MgO has a specific gravity smaller than specific gravities of other alkaline earth metal oxides, and accordingly, can contribute to increasing the specific elastic modulus. The glass transition temperature of a common glass tends to increase when an alkaline earth metal oxide having a large specific gravity is added. In contrast, in studies carried out by the inventors of the present application, the glass transition temperature of the glass 3 had a tendency to decrease when an alkaline earth metal oxide whose specific gravity is larger than the specific gravity of MgO was added. From the viewpoint of increasing the specific elastic modulus and the glass transition temperature of the glass 3, the mole ratio (MgO/(MgO+CaO+SrO+BaO)) is preferably 0.800 or more, and more preferably 0.850 or more, 0.900 or more, 0.950 or more, or 1.000 in order of increasing preference.

From the viewpoint of reducing the melt viscosity, reducing the liquidus temperature, and improving the low-roughness polishing property of the glass, a mole ratio (Na₂O/MgO) of the Na₂O content to the MgO content in the glass 3 is preferably more than 0.080. Also, the mole ratio (Na₂O/MgO) in the glass 3 more than 0.080 can contribute to reducing the specific resistance of the glass melt. From this viewpoint, the mole ratio (Na₂O/MgO) in the glass 3 is more preferably 0.090 or more, and even more preferably 0.100 or more, 0.110 or more, 0.120 or more, 0.130 or more, 0.140 or more, 0.150 or more, or 0.160 or more in order of increasing preference. On the other hand, from the viewpoint of increasing the glass transition temperature and the specific elastic modulus, the mole ratio (Na₂O/MgO) in the glass 3 is preferably less than 0.240, and more preferably 0.230 or less, 0.220 or less, 0.210 or less, 0.200 or less, 0.190 or less, or 0.180 or less in order of increasing preference.

From the viewpoint of reducing the specific gravity and improving devitrification resistance, the TiO₂ content in the glass 3 is preferably 4.00% or less, and more preferably 3.00% or less, 2.00% or less, or 1.00% or less in order of increasing preference. The TiO₂ content in the glass 3 may be 0%, 0% or more, or more than 0%.

From the viewpoint of reducing the specific gravity, increasing the Young's modulus, and increasing the specific elastic modulus of the glass, the ZnO content is preferably 10.00% or less, and more preferably 8.00% or less, 6.00% or less, 4.00% or less, 2.00% or less, or 1.00% or less in order of increasing preference. The ZnO content in the glass 3 may be 0%, 0% or more, or more than 0%.

The Fe₂O₃ content in the glass 3 expressed as an outer percentage may be 1 mol% or less, 0.7 mol% or less, 0.5 mol% or less, 0.4 mol% or less, 0.3 mol% or less, 0.1 mol% or less, 0.07 mol% or less, 0.05 mol% or less, 0.04 mol% or less, 0.03 mol% or less, or 0.02 mol% or less. Note that the Fe₂O₃ content is expressed as an outer percentage. That is, the Fe₂O₃ content is represented by a mole percentage of the amount of Fe₂O₃ contained in the glass with respect to 100% where the total content of the glass components other than Fe₂O₃ (the total content of the glass components and additives when the glass contains additives in addition to the glass components) is 100%. In an embodiment, the glass 3 may contain no Fe (the Fe₂O₃ content expressed as the above-described outer percentage may be 0 mol%).

The glass 3 may also contain one or more metals selected from the group consisting of Zr, Y, La, Ti, Hf, Cu, Co, Mn, Nd, Pr, Nb, V, Cr, Ni, Mo, Ho, and Er or an oxide thereof, and may contain none of them. When a glass composition based on oxides contains an oxide of one or more metals selected from the group consisting of Zr, Y, La, Ti, Hf, Cu, Co, Mn, Nd, Pr, Nb, V, Cr, Ni, Mo, Ho, and Er, the thermal stability of the glass tends to increase. In an embodiment, the content of an oxide of one or more metals selected from the group consisting of Zr, Y, La, Ti, Hf, Cu, Co, Mn, Nd, Pr, Nb, V, Cr, Ni, Mo, Ho, and Er (the total content thereof when oxides of a plurality of metals are contained) may be 0%, 0% or more, or more than 0%, and may be 5.00% or less, 4.00% or less, 3.00% or less, 2.00% or less, 1.00% or less, 0.50% or less, or 0.10% or less. For example, the Y₂O₃ content may be 0% or more, or more than 0%, and may be 3.00% or less, 2.00% or less, or 1.00% or less.

F is a component that easily volatilizes when glass melts and also causes striae, and thus it is preferable that the glass 3 does not contain F. It is preferable that the glass 3 does not contain F from the viewpoint of suppressing erosion of a melting furnace, suppressing a reduction in the Young's modulus, and suppressing a reduction in the specific elastic modulus as well.

Pb, Cd, and As are substances that adversely affect the environment, and thus the introduction of these substances is preferably avoided.

From the viewpoint of obtaining a clarifying effect, the glass 3 may contain at least one selected from the group consisting of SnO₂, CeO₂, and Sb₂O₃. In an embodiment, the total content of SnO₂ and CeO₂ may be 0%. In another embodiment, the glass 3 may contain SnO₂ and/or CeO₂, and the total content of SnO₂ and CeO₂ (SnO₂+CeO₂) is preferably 0.05% to 2%. When the total content of SnO₂ and CeO₂ is 0.05% or more, a sufficient clarifying effect can be obtained, and residual bubbles can be reduced. Also, when the total content (SnO₂+CeO₂) is 2% or less, it is possible to prevent a reduction in the productivity due to molten glass blowing up while the glass is molten. The lower limit of the total content (SnO₂+CeO₂) is preferably 0.10% or more, more preferably 0.20% or more, even more preferably 0.25% or more, further preferably 0.30% or more, still more preferably 0.35% or more, and yet more preferably 0.40% or more. Also, the upper limit of the total content (SnO₂+CeO₂) is preferably 1.5% or less, more preferably 1.2% or less, even more preferably 1.0% or less, further preferably 0.70% or less, still more preferably 0.65% or less, yet more preferably 0.60% or less, further more preferably 0.55% or less, and still further preferably 0.50% or less.

SnO₂ serves to promote clarification in a state where the melting temperature of the glass is comparatively high (a temperature range of approximately 1400°C to 1600°C). In a circumstance where the use of a clarifying agent that adversely affects the environment, such as Sb₂O₃ or arsenious acid, is limited, in an embodiment, the introduction of SnO₂ into the glass 3 is preferable for removing bubbles in the glass having a high melting temperature. From the viewpoint of obtaining a clarifying effect, the SnO₂ content is preferably 0.01% or more, more preferably 0.05% or more, even more preferably 0.10% or more, further preferably 0.15% or more, and still more preferably 0.20% or more. Also, the SnO₂ content is preferably 2% or less, more preferably 1.5% or less, even more preferably 1.0% or less, further preferably 0.8% or less, and still more preferably 0.5% or less.

CeO₂ is a component that exhibits a glass clarification action as is the case for SnO₂. CeO₂ serves to take in oxygen and fix it as a glass component in a state where the melting temperature of the glass is comparatively low (a temperature range approximately from 1200°C to 1400°C), and accordingly, in an embodiment, it is preferable to introduce CeO₂ as a clarifying agent into the glass 3. From the viewpoint of obtaining a clarifying effect, the CeO₂ content is preferably 0.01% or more, more preferably 0.05% or more, even more preferably 0.08% or more, and further preferably 0.10% or more. Also, the CeO₂ content is preferably 2% or less, more preferably 1.5% or less, even more preferably 1.0% or less, further preferably 0.8% or less, still more preferably 0.5% or less, and yet more preferably 0.3% or less. When SnO₂ and CeO₂ are allowed to coexist, a clarification action can be obtained in a wide temperature range, and thus, in an embodiment, the glass 3 preferably contains both SnO₂ and CeO₂.

From the viewpoint of reducing environmental burdens, it is desirable to refrain from using Sb₂O₃. The Sb₂O₃ content in the glass 3 is preferably in the range of 0% to 0.5%. The Sb₂O₃ content is more preferably 0.3% or less, even more preferably 0.1% or less, further preferably 0.05% or less, and still more preferably 0.02% or less, and particularly preferably Sb₂O₃ is not contained.

The glass 3 can be manufactured by weighing and blending raw glass materials such as oxides, carbonates, nitrates, sulfates, and hydroxides so as to give a predetermined glass composition, by sufficiently mixing these materials, heating and melting the mixture within a range of, for example, 1400°C to 1600°C in a melting vessel, and by molding homogenized molten glass that has been subjected to clarification and stirring to cause sufficient bubble separation. It is preferable to heat and melt raw glass materials in a melting tank at 1400°C to 1550°C, to raise the temperature of the obtained molten glass in a clarification tank and keep the glass at 1450°C to 1600°C, and after that to lower the temperature and cause glass to flow out at 1200°C to 1400°C to be molded, for example.

According to an aspect of the present invention, it is possible to provide
a glass for a magnetic recording medium substrate or for a glass spacer for a magnetic recording/reproducing device, the glass being an amorphous glass,
wherein a B₂O₃ content is 0.1 mol% or more and 2.0 mol% or less,
a Na₂O content is 1.0 mol% or more and 6.0 mol% or less,
a CaO content is 0 mol% or more and 1.0 mol% or less, and
the glass satisfies at least one of the following (1) to (10).
(1) A mole ratio (Na₂O/(Li₂O+Na₂O+K₂O)) is 0.950 or more, and a total content (SiO₂+B₂O₃+Al₂O₃) is 70.00% or more.
(2) The glass does not contain Li₂O or K₂O, and a total content (SiO₂+B₂O₃+Al₂O₃) is 70.00% or more.
(3) A mole ratio (Na₂O/(Li₂O+Na₂O+K₂O)) is 0.950 or more, and a total content (SiO₂+B₂O₃) is 58.00% or more.
(4) The glass does not contain Li₂O or K₂O, and a total content (SiO₂+B₂O₃) is 58.00% or more.
(5) A mole ratio (Na₂O/(Li₂O+Na₂O+K₂O)) is 0.950 or more, and a total content (SiO₂+Al₂O₃) is 70.00% or more.
(6) The glass does not contain Li₂O or K₂O, and a total content (SiO₂+Al₂O₃) is 70.00% or more.
(7) A mole ratio (Na₂O/(Li₂O+Na₂O+K₂O)) is 0.950 or more, and a TiO₂ content is 4.00% or less.
(8) The glass does not contain Li₂O or K₂O, and a TiO₂ content is 4.00% or less.
(9) A mole ratio (Na₂O/(Li₂O+Na₂O+K₂O)) is 0.950 or more, and a ZnO content is 10.00% or less.
(10) The glass does not contain Li₂O or K₂O, and a ZnO content is 10.00% or less.

As for each glass described above, the above descriptions relating to the compositions of the glass 3-A and the glass 3-B and the following descriptions relating to physical properties of the glass 3-A and the glass 3-B can be referred to.

According to an aspect of the present invention, it is possible to provide:
a glass (hereinafter referred to as a "glass 3-a") for a magnetic recording medium substrate or for a glass spacer for a magnetic recording/reproducing device, the glass being an amorphous glass,
wherein a B₂O₃ content is 0.10 mol% or more and 2.00 mol% or less,
a total content of Na₂O and K₂O is 1.00 mol% or more and 6.00 mol% or less,
a CaO content is 0 mol% or more and 1.00 mol% or less, and
a MgO content is 14.00 mol% or more; and
a glass (hereinafter referred to as a "glass 3-b") for a magnetic recording medium substrate or for a glass spacer for a magnetic recording/reproducing device, the glass being an amorphous glass,
wherein a B₂O₃ content is 0.10 mol% or more and 2.00 mol% or less,
a total content of Na₂O and K₂O is 1.00 mol% or more and 6.00 mol% or less,
a CaO content is 0 mol% or more and 1.00 mol% or less, and
a total content of MgO, SrO, CaO, and BaO (MgO+SrO+CaO+BaO) is 14.00 mol% or more.

As for the glass 3-a and the glass 3-b, the above descriptions relating to the compositions of the glass 3-A and the glass 3-B and the following descriptions relating to physical properties of the glass 3-A and the glass 3-B can be referred to.

### <Glass physical properties>

As a result of performing the above-described composition adjustment, the glass 3 can have various glass physical properties described below.

### (Specific elastic modulus)

The glass 3 can have high rigidity due to having the composition described above. The specific elastic modulus of the glass 3 is preferably 35.0 MNm/kg or more, and more preferably 35.5 MNm/kg or more, 36.0 MNm/kg or more, 36.5 MNm/kg or more, or 37.0 MNm/kg or more in order of increasing preference. The specific elastic modulus may be, for example, 45.0 MNm/kg or less, 44.0 MNm/kg or less, 43.0 MNm/kg or less, 42.0 MNm/kg or less, 41.0 MNm/kg or less, 40.0 MNm/kg or less, 39.0 MNm/kg or less, or 38.0 MNm/kg or less. However, a higher specific elastic modulus is more preferable because rigidity becomes higher, and thus the specific elastic modulus of the glass 3 is not limited to the above-described values. Note that the specific elastic modulus of the glass 3 may also be 37.0 MNm/kg or less in view of a balance between the specific elastic modulus and the glass transition temperature.

### (Young's modulus E)

The Young's modulus of the glass 3 is preferably 86.0 GPa or more, more preferably 87.0 GPa or more, and even more preferably 88.0 GPa or more, 89.0 GPa or more, 90.0 GPa or more, 91.0 GPa or more, 92.0 GPa or more, or 93.0 GPa or more in order of increasing preference. The Young's modulus of the glass 3 may be 120.0 GPa or less, 110.0 GPa or less, 100 GPa or less, or 95.0 GPa or less, for example. However, a higher Young's modulus is more preferable because rigidity becomes higher, and thus the Young's modulus of the glass 3 is not limited to the above-described values. Note that the Young's modulus of the glass 3 may also be 94.0 GPa or less, 93.0 GPa or less, or 92.0 GPa or less in view of a balance between the Young's modulus and the glass transition temperature.

### (Specific gravity d)

The specific gravity of the glass 3 is preferably 2.80 or less, more preferably 2.75 or less, even more preferably 2.70 or less, further preferably 2.65 or less, and still more preferably 2.60 or less. The specific gravity of the glass 3 may be 2.40 or more, for example. However, a lower specific gravity is more preferable, and thus the specific gravity of the glass 3 is not limited to the above-described values.

### (Glass transition temperature Tg)

The glass 3 can also exhibit high heat resistance due to having the glass composition described above. The glass transition temperature Tg of the glass 3, which is an indicator of heat resistance, may be 550°C or more, for example, and is preferably 600°C or more, and more preferably 610°C or more, 620°C or more, 630°C or more, 640°C or more, 650°C or more, 660°C or more, 670°C or more, 680°C or more, 690°C or more, 700°C or more, 710°C or more, 720°C or more, 730°C or more, 740°C or more, or 750°C or more in order of increasing preference. Also, the Tg of the glass 3 may be, for example, 850°C or less, 830°C or less, 810°C or less, 790°C or less, 770°C or less, or 750°C or less. However, a higher Tg is more preferable from the viewpoint of heat resistance, and thus the Tg of the glass 3 is not limited to the above-described values.

### (Thermal stability)

Preferably, the glass 3 can exhibit high thermal stability. Examples of methods for evaluating thermal stability include a 16-hour holding test performed at 1300°C and a 16-hour holding test performed at 1320°C, which will be described later in detail. An evaluation result in the 16-hour holding test performed at 1300°C is preferably A or B, and more preferably A. An evaluation result in the 16-hour holding test performed at 1320°C is preferably A or B, and more preferably A.

### [Magnetic recording medium substrate]

A magnetic recording medium substrate according to an aspect of the present invention is made of any of the above-described glasses.

Magnetic recording medium substrates can be manufactured through processes for heating raw glass materials to thereby prepare molten glass, for molding the molten glass into a plate shape by any one of a press molding method, a down-draw method, and a float method, and for processing the obtained plate-shaped glass. In a press molding method, molten glass flowing out from a glass outflow pipe is cut to a predetermined volume to give an intended molten glass lump, which is press-molded with a press molding die to thereby produce a thin disk-shaped substrate blank, for example. Subsequently, the obtained substrate blank is given a center hole, and subjected to polishing processes such as outer/inner circumference processing, lapping, and polishing for both main surfaces. Subsequently, a disk-shaped substrate can be obtained through cleaning processes including acid cleaning and alkali cleaning. Known techniques relating to manufacturing of magnetic recording medium substrates can be used for various processes performed in order to obtain the above-described magnetic recording medium substrate.

In an embodiment, the surface composition and internal composition of the above-described magnetic recording medium substrate are homogeneous. Here, "the surface composition and internal composition are homogeneous" means that no ion exchange has been performed (that is, an ion-exchange layer is not contained). Because a magnetic recording medium substrate having no ion-exchange layer is manufactured without performing ion exchange treatment, manufacturing costs can be drastically reduced.

Alternatively, in an embodiment, the above-described magnetic recording medium substrate has an ion-exchange layer on a part of or on the entirety of the surface. An ion-exchange layer exhibits compression stress, and thus the presence or absence of an ion-exchange layer can be confirmed by fracturing the substrate perpendicularly to a main surface and obtaining a stress profile by the Babinet method in the fracture surface. A "main surface" is a surface of the substrate on which a magnetic recording layer is to be provided or has been provided. This surface has the largest area among surfaces of the magnetic recording medium substrate, and thus is referred to as a main surface. In the case of a disk-shaped magnetic recording medium, the main surface corresponds to a circular surface (if there is a center hole, the center hole is excluded) of the disk. The presence or absence of an ion-exchange layer can be confirmed also by a method for measuring concentration distribution of alkali metal ions in the depth direction from the substrate surface, for example.

An ion-exchange layer can be formed by bringing an alkali salt into contact with a substrate surface under a high temperature and exchanging an alkali metal ion in the alkali salt for an alkali metal ion in the substrate. Known techniques can be applied to ion exchange (also referred to as a "strengthening treatment" or "chemical strengthening"), and as an example, paragraphs 0068 and 0069 in WO 2011/019010A1 can be referred to.

The thickness of the above-described magnetic recording medium substrate is 1.5 mm or less, for example, preferably 1.2 mm or less, more preferably 1.0 mm or less, further preferably 0.8 mm or less, still more preferably less than 0.8 mm, yet more preferably 0.7 mm or less, and further more preferably 0.6 mm or less. Also, the thickness of the magnetic recording medium substrate is 0.2 mm or more, for example. Reducing the thickness of the magnetic recording medium substrate is preferable from the viewpoint of increasing the recording capacity of an HDD. Furthermore, the above-described magnetic recording medium substrate preferably has a disk shape having a center hole.

The above-described magnetic recording medium substrate is made of an amorphous glass. Amorphous glass can realize good surface smoothness when it is processed into a substrate, as compared with crystallized glass.

The above-described magnetic recording medium substrate is made of any of the above-described glasses, and thus can have the above-described physical properties of the above-described glasses.

### [Magnetic recording medium]

An aspect of the present invention relates to a magnetic recording medium including the above-described magnetic recording medium substrate and a magnetic recording layer.

A magnetic recording medium is referred to as a magnetic disk, hard disk, or the like, and is suitable for various magnetic recording/reproducing devices such as: internal memories (such as fixed disk) for desktop personal computers, computers for servers, notebook computers, and mobile personal computers; internal memories for portable recording/reproducing devices for recording and reproducing images and/or voices; and recording/reproducing devices for in-vehicle audio devices. In the present invention and this specification, a "magnetic recording/reproducing device" means a device capable of performing one of or both of magnetic recording of information and magnetic reproduction of information.

A magnetic recording medium has a configuration in which, for example, at least an adhesive layer, an undercoat layer, a magnetic layer (magnetic recording layer), a protecting layer, and a lubricating layer are stacked on a main surface of a magnetic recording medium substrate in this order from the main surface.

For example, a magnetic recording medium substrate is introduced into an evacuated film formation device, and sequential film formation from the adhesive layer to the magnetic layer is performed over the main surface of the magnetic recording medium substrate by a DC (Direct Current) magnetron sputtering process in an Ar atmosphere. CrTi can be used for the adhesive layer, for example, and a material containing Ru or MgO can be used for the undercoat layer, for example. Note that a soft magnetic layer or a heat sink layer may also be added as appropriate. After the above-described film formation, the protecting layer is formed by a CVD (Chemical Vapor Deposition) process using C₂H₄, for example, and subjected to a nitriding treatment of introducing nitrogen to the surface in the same chamber to thereby form a magnetic recording medium. Thereafter, PFPE (polyfluoropolyether) is applied onto the protecting layer by a dip coat method, for example, and thus the lubricating layer can be formed.

In order to achieve further higher density recording with the magnetic recording medium, the magnetic recording layer preferably contains a magnetic material with high magnetic anisotropy energy. Examples of magnetic materials preferable from this viewpoint include Fe-Pt-based magnetic materials and Co-Pt-based magnetic materials. Note that, here, "-based" means inclusion. Namely, the above-described magnetic recording medium can have a magnetic recording layer containing Fe and Pt, or Co and Pt, as the magnetic recording layer. With regard to a magnetic recording layer containing these magnetic materials and a film formation method thereof, descriptions in paragraph 0074 in WO 2011/019010A1, and Examples in this publication can be referred to. A magnetic recording medium having such a magnetic recording layer is preferably applied to a magnetic recording device by a recording system that is called an energy-assisted recording system. Among energy-assisted recording systems, a recording system in which magnetization reversal is assisted by irradiation with near-field light or the like is referred to as a heat-assisted recording system, and a recording system in which magnetization reversal is assisted by microwaves is referred to as a microwave-assisted recording system. With regard to details of these systems, paragraph 0075 in WO 2011/019010A1 can be referred to. Note that a conventional CoPtCr-based material may be used as a magnetic material for forming a magnetic recording layer.

Incidentally, in recent years, a significant reduction in a gap between a recording/reproducing element portion of a magnetic head and a surface of a magnetic recording medium (low floating amount) is achieved by mounting a DFH (Dynamic Flying Height) mechanism on the magnetic head, and thereby further higher recording density is realized. The DFH mechanism is a function that causes only the vicinity of the recording/reproducing element portion to project toward the surface of the medium by providing a heating portion such as a micro heater near the element portion of the magnetic head. Consequently, the distance (flying height) between the magnetic head and the magnetic recording layer of the medium becomes smaller, and thus it becomes possible to read signals from smaller magnetic particles and to achieve further higher recording density. In an embodiment, the above-described magnetic recording medium substrate can be used as a substrate of a magnetic recording medium that is to be applied to a magnetic recording/reproducing device provided with a magnetic head having the DFH mechanism.

There is no particular limitation on the dimensions of both the above-described magnetic recording medium substrate (e.g., a glass substrate for a magnetic disk) and the magnetic recording medium (e.g., a magnetic disk). For example, the medium and the substrate can also be downsized because higher recording density is possible. Also, it is possible to increase the size of the medium and the substrate in order to increase recording capacity per magnetic recording medium. They can have a nominal diameter of, naturally, 2.5 inches, a smaller diameter (e.g., 1 inch or 1.8 inches), 3 inches, 3.5 inches, or have a dimension larger than 3.5 inches, for example.

### [Glass spacer for magnetic recording/reproducing device]

A glass spacer for a magnetic recording/reproducing device (hereinafter also simply referred to as "glass spacer") according to an aspect of the present invention is made of the above-described glass.

A magnetic recording medium can be used for magnetically recording and/or reproducing information in a magnetic recording/reproducing device. A magnetic recording/reproducing device is usually provided with a spacer for fixing a magnetic recording medium to a spindle of a spindle motor and/or for keeping a distance between a plurality of magnetic recording media. In recent years, the use of a glass spacer as the spacer in this manner has been proposed. It is also desirable that this glass spacer has high rigidity for reasons similar to the reasons described in detail regarding the glass for a magnetic recording medium substrate. To address this, a glass having the above-described composition can have high rigidity and thus is suitable for a glass spacer for a magnetic recording/reproducing device.

A spacer for a magnetic recording/reproducing device is a ring-shaped member, and details of the configuration of a glass spacer, a method for manufacturing a glass spacer, and the like are known. Furthermore, with regard to the method for manufacturing a glass spacer, the above descriptions relating to a method for manufacturing a glass for a magnetic recording medium substrate and a method for manufacturing a magnetic recording medium substrate can also be referred to. Furthermore, with regard to other details of a glass composition, glass physical properties, and the like of the glass spacer, the above descriptions relating to the glass, the magnetic recording medium substrate made of the glass, and the magnetic recording medium including this magnetic recording medium substrate can be referred to.

Note that a spacer for a magnetic recording/reproducing device can be constituted by the above-described glass spacer, or may also have a configuration in which one or more films such as conductive films are formed on a surface of the glass spacer. In order to eliminate static electricity generated while a magnetic recording medium rotates, a conductive film such as an NiP alloy film can also be formed on the surface of the glass spacer through plating, or using an immersion method, a vapor deposition method, a sputtering method, or the like. Also, the surface smoothness of the glass spacer can be enhanced through polishing processing (for example, the average surface roughness Ra can be 1 µm or less), which can increase adhesion between a magnetic recording medium and the spacer to thereby inhibit the occurrence of positional displacement.

### [Magnetic recording/reproducing device]

An aspect of the present invention relates to a magnetic recording/reproducing device including at least one selected from the group consisting of the magnetic recording medium and the glass spacer described above.

A magnetic recording/reproducing device includes at least one magnetic recording medium and at least one spacer, and further includes usually a spindle motor for rotationally driving the magnetic recording medium, and at least one magnetic head for performing recording and/or reproduction of information to the magnetic recording medium.

The above-described magnetic recording/reproducing device according to an aspect of the present invention can include, as at least one magnetic recording medium, the magnetic recording medium according to an aspect of the present invention, and also can include a plurality of the magnetic recording media according to an aspect of the present invention. The above-described magnetic recording/reproducing device according to an aspect of the present invention can include, as at least one spacer, the glass spacer according to an aspect of the present invention, and also can include a plurality of the glass spacers according to an aspect of the present invention. A small difference between the thermal expansion coefficient of a magnetic recording medium and the thermal expansion coefficient of a spacer is preferable from the viewpoint of inhibiting the occurrence of phenomena that may occur due to the difference between the thermal expansion coefficients of the two, for example, strain of the magnetic recording medium and lowering of stability during the rotation due to positional displacement of the magnetic recording medium. From this viewpoint, it is preferable that the magnetic recording/reproducing device according to an aspect of the present invention includes: the magnetic recording medium according to an aspect of the present invention, as at least one magnetic recording medium, or as more magnetic recording media in a case where a plurality of magnetic recording media are included; and the glass spacer according to an aspect of the present invention, as at least one spacer, or as more spacers in a case where a plurality of spacers are included. Furthermore, for example, the magnetic recording/reproducing device according to an aspect of the present invention can be one in which the glass constituting the magnetic recording medium substrate included in the magnetic recording medium and the glass constituting the glass spacer have the same glass composition.

The magnetic recording/reproducing device according to an aspect of the present invention is only required to include at least one of the magnetic recording medium according to an aspect of the present invention and the glass spacer according to an aspect of the present invention. Known techniques relating to magnetic recording/reproducing devices can be applied to other points. In an aspect, it is possible to use, as a magnetic head, an energy-assisted magnetic recording head having: an energy source (for example, heat source such as a laser light source, microwaves, or the like) for assisting magnetization reversal (assisting writing of magnetic signals); a recording element portion; and a reproducing element portion. A magnetic recording/reproducing device using an energy-assisted recording system that includes the energy-assisted magnetic recording head is useful as a magnetic recording/reproducing device having high recording density and high reliability. Furthermore, when manufacturing a magnetic recording medium used for a magnetic recording/reproducing device of an energy-assisted recording system such as a heat-assisted recording system provided with a heat-assisted magnetic recording head having a laser light source or the like, sometimes a magnetic recording layer containing a magnetic material with high magnetic anisotropy energy is formed on a magnetic recording medium substrate. In order to form such a magnetic recording layer, film formation is usually performed at a high temperature or heat treatment is performed at a high temperature after film formation. In an embodiment, the magnetic recording medium substrate according to an aspect of the present invention may be a magnetic recording medium substrate having high heat resistance capable of withstanding such treatment performed at a high temperature. However, the magnetic recording/reproducing device according to an aspect of the present invention is not limited to an energy-assisted magnetic recording/reproducing device.

### Examples

Hereinafter, the present invention will be described in more detail with reference to Examples. However, the present invention is not limited to embodiments represented in Examples

### [Examples 1 to 81]

Raw materials such as oxides, carbonates, nitrates, sulfates, and hydroxides were weighed so as to give glasses with respective compositions shown in the following tables, and these materials were then mixed to give respective blended raw materials. Molten glass obtained by introducing the blended raw materials into a melting tank and by heating and melting the same in a range of 1400°C to 1600°C was held at 1400°C to 1550°C for 6 hours in a clarification tank. Then, the temperature was lowered (temperature decrease) and the molten glass was held in a range of 1200°C to 1400°C for 1 hour and was then molded to give each glass (amorphous oxide glass) for evaluation described below.

The glasses of Examples 1 to 62 correspond at least to the glass 2.

The glasses of Examples 63 to 81 correspond at least to the glass 3.

Out of the glasses of Examples 1 to 81, some glasses also correspond to the glass 1 and/or the glass 4 as described later regarding the tables given below and T1 and T2.

### <Evaluation of glass physical properties>

### (1) Glass transition temperature Tg, Average linear expansion coefficient α

The glass transition temperature Tg and an average linear expansion coefficient α at 100°C to 300°C of each glass were measured using a thermomechanical analysis (TMA) device.

### (2) Young's modulus E

The Young's modulus of each glass was measured using an ultrasonic method.

### (3) Specific gravity d

The specific gravity of each glass was measured using the Archimedes method.

### (4) Specific elastic modulus

The specific elastic modulus was calculated from the Young's modulus obtained in (2) and the specific gravity obtained in (3).

### (5) 16-hour holding test performed at 1300°C

100 g of each glass was placed in a platinum crucible, and the crucible was placed in a heating furnace of which the internal temperature was set to 1300°C, and left for 16 hours while the internal temperature was maintained (holding test). After 16 hours elapsed, the crucible was taken out of the heating furnace, the glass in the crucible was transferred onto a refractory and cooled to room temperature (20°C to 25°C), and the presence or absence of crystals of each glass was observed with use of an optical microscope (40 to 100x magnification) and evaluated based on the following criteria.
A: There was no crystal at the surface and the inside of the glass and at an interface with a bottom portion of the platinum crucible.
B: 10 or less crystals with a diameter of several tens of micrometers were observed per 100 g at the surface of the glass and at the interface with the bottom portion of the platinum crucible.
C: 10 or more crystals with a diameter of several tens of micrometers were observed per 100 g at the surface of the glass and at the interface with the bottom portion of the platinum crucible.
D: There were crystals inside the glass.
E: There were crystals at the surface and the inside of the glass and at the interface with the bottom portion of the platinum crucible.
F: Many crystals were observed in the entire glass and the glass was somewhat cloudy.
G: The glass was cloudy.

### (6) 16-hour holding test performed at 1320°C

A holding test was carried out and each glass subjected to the holding test was evaluated using the method described in (5), except that the internal temperature of the furnace was set to 1320°C.

### (7) Liquidus temperature LT

The liquidus temperature of each glass shown in the tables given below was obtained using the following method.

50 g of each glass was weighed into a platinum crucible. The platinum crucible with a platinum lid closed was placed in a heating furnace at an internal ambient temperature of 1350°C to completely melt the glass in the crucible, the internal ambient temperature was then lowered to a predetermined temperature, and the glass was held at the predetermined temperature for 16 hours. After the glass was held for 16 hours, the platinum crucible was taken out of the furnace and left to cool the glass to room temperature (about 20°C to 25°C). Whether or not crystals were precipitated was examined by visually observing the cooled glass.

The above operation was carried out from 1330°C to 1200°C in increments of 10°C, and the lowest temperature at which no crystals were precipitated was taken to be the liquidus temperature LT.

It was confirmed using the following method that the liquidus temperatures LT of the glasses of Examples 17, 18, 22, 29, 32, and 33 were 1300°C or less.

50 g of each glass was weighed into a platinum crucible. The platinum crucible with a platinum lid closed was placed in a heating furnace at an internal ambient temperature of 1350°C to completely melt the glass in the crucible, the internal ambient temperature was then lowered to 1300°C, and the glass was held at 1300°C for 16 hours. After the glass was held for 16 hours, the platinum crucible was taken out of the furnace and left to cool the glass to room temperature (about 20°C to 25°C). The cooled glass was visually observed, and whether or not crystals were precipitated was examined, and no crystal precipitation was observed.

### (8) Evaluation of roughness

Glass substrates for magnetic disks having respective glass compositions shown in the tables given below were produced using a method described below. Basic processing conditions such as polishing conditions and cleaning conditions were the same for all glass substrates. An arithmetic mean roughness Ra (JIS B0601:2001) of a main surface of each glass substrate for a magnetic disk subjected to final cleaning was measured with use of an AFM (Atomic Force Microscope).

The measured Ra of each glass is shown as a relative value (ratio) when the measured Ra of Example 66 is taken to be 1.00. The degree of roughness was ranked based on the following criteria. Note that there is no problem in practical use even if the roughness is Rank C.
Rank A: less than 0.80
Rank B: 0.80 or more and less than 0.90
Rank C: 0.90 or more and 1.00 or less

The above results are shown in the following tables.

**[Table 1-1]**

| mol% | B₂O₃ | SiO₂ | Al₂O₃ | MgO | CaO | Li₂O | Na₂O | K₂O | TiO₂ | Y₂O₃ | Total |
|---|---|---|---|---|---|---|---|---|---|---|---|
| Ex. 1 | 0.00 | 58.00 | 15.00 | 23.00 | 0.00 | 4.00 | 0.00 | 0.00 | 0.00 | 0.00 | 100.00 |
| Ex. 2 | 0.00 | 60.00 | 13.00 | 23.00 | 0.00 | 4.00 | 0.00 | 0.00 | 0.00 | 0.00 | 100.00 |
| Ex. 3 | 0.10 | 60.00 | 13.00 | 22.90 | 0.00 | 4.00 | 0.00 | 0.00 | 0.00 | 0.00 | 100.00 |
| Ex. 4 | 0.30 | 60.00 | 13.00 | 22.70 | 0.00 | 4.00 | 0.00 | 0.00 | 0.00 | 0.00 | 100.00 |
| Ex. 5 | 0.30 | 60.00 | 15.00 | 20.70 | 0.00 | 4.00 | 0.00 | 0.00 | 0.00 | 0.00 | 100.00 |
| Ex. 6 | 0.50 | 60.00 | 15.00 | 20.50 | 0.00 | 4.00 | 0.00 | 0.00 | 0.00 | 0.00 | 100.00 |
| Ex. 7 | 1.00 | 60.00 | 15.00 | 20.00 | 0.00 | 4.00 | 0.00 | 0.00 | 0.00 | 0.00 | 100.00 |
| Ex. 8 | 2.00 | 60.00 | 15.00 | 19.00 | 0.00 | 4.00 | 0.00 | 0.00 | 0.00 | 0.00 | 100.00 |
| Ex. 9 | 5.00 | 60.00 | 15.00 | 16.00 | 0.00 | 4.00 | 0.00 | 0.00 | 0.00 | 0.00 | 100.00 |
| Ex. 10 | 0.30 | 60.00 | 17.00 | 18.70 | 0.00 | 4.00 | 0.00 | 0.00 | 0.00 | 0.00 | 100.00 |
| Ex. 11 | 1.00 | 60.00 | 17.00 | 18.00 | 0.00 | 4.00 | 0.00 | 0.00 | 0.00 | 0.00 | 100.00 |
| Ex. 12 | 3.00 | 60.00 | 17.00 | 16.00 | 0.00 | 4.00 | 0.00 | 0.00 | 0.00 | 0.00 | 100.00 |
| Ex. 13 | 5.00 | 60.00 | 17.00 | 14.00 | 0.00 | 4.00 | 0.00 | 0.00 | 0.00 | 0.00 | 100.00 |
| Ex. 14 | 0.30 | 65.00 | 13.00 | 19.70 | 0.00 | 2.00 | 0.00 | 0.00 | 0.00 | 0.00 | 100.00 |
| Ex. 15 | 0.30 | 65.00 | 13.00 | 19.20 | 0.00 | 2.50 | 0.00 | 0.00 | 0.00 | 0.00 | 100.00 |
| Ex. 16 | 0.30 | 65.00 | 13.00 | 18.70 | 0.00 | 3.00 | 0.00 | 0.00 | 0.00 | 0.00 | 100.00 |
| Ex. 17 | 0.30 | 65.00 | 13.00 | 18.20 | 0.00 | 3.50 | 0.00 | 0.00 | 0.00 | 0.00 | 100.00 |
| Ex. 18 | 0.30 | 65.00 | 13.00 | 17.70 | 0.00 | 4.00 | 0.00 | 0.00 | 0.00 | 0.00 | 100.00 |
| Ex. 19 | 0.30 | 65.00 | 14.00 | 18.20 | 0.00 | 2.50 | 0.00 | 0.00 | 0.00 | 0.00 | 100.00 |
| Ex. 20 | 0.30 | 65.00 | 14.00 | 17.70 | 0.00 | 3.00 | 0.00 | 0.00 | 0.00 | 0.00 | 100.00 |

**[Table 1-2]**

| mol% | B₂O₃ | SiO₂ | Al₂O₃ | MgO | CaO | Li₂O | Na₂O | K₂O | TiO₂ | Y₂O₃ | Total |
|---|---|---|---|---|---|---|---|---|---|---|---|
| Ex. 21 | 0.30 | 65.00 | 14.00 | 17.20 | 0.00 | 3.50 | 0.00 | 0.00 | 0.00 | 0.00 | 100.00 |
| Ex. 22 | 0.30 | 65.00 | 14.00 | 16.70 | 0.00 | 4.00 | 0.00 | 0.00 | 0.00 | 0.00 | 100.00 |
| Ex. 23 | 0.30 | 65.00 | 13.00 | 19.70 | 0.00 | 2.00 | 0.00 | 0.00 | 0.00 | 0.00 | 100.00 |
| Ex. 24 | 1.00 | 65.00 | 13.00 | 19.00 | 0.00 | 2.00 | 0.00 | 0.00 | 0.00 | 0.00 | 100.00 |
| Ex. 25 | 0.30 | 65.00 | 14.00 | 18.20 | 0.00 | 2.50 | 0.00 | 0.00 | 0.00 | 0.00 | 100.00 |
| Ex. 26 | 1.00 | 65.00 | 14.00 | 17.50 | 0.00 | 2.50 | 0.00 | 0.00 | 0.00 | 0.00 | 100.00 |
| Ex. 27 | 0.30 | 65.00 | 13.00 | 18.70 | 0.00 | 3.00 | 0.00 | 0.00 | 0.00 | 0.00 | 100.00 |
| Ex. 28 | 0.30 | 67.00 | 13.00 | 16.70 | 0.00 | 3.00 | 0.00 | 0.00 | 0.00 | 0.00 | 100.00 |
| Ex. 29 | 0.30 | 65.00 | 13.00 | 18.20 | 0.00 | 3.50 | 0.00 | 0.00 | 0.00 | 0.00 | 100.00 |
| Ex. 30 | 0.30 | 67.00 | 13.00 | 16.20 | 0.00 | 3.50 | 0.00 | 0.00 | 0.00 | 0.00 | 100.00 |
| Ex. 31 | 0.30 | 67.00 | 14.00 | 15.20 | 0.00 | 3.50 | 0.00 | 0.00 | 0.00 | 0.00 | 100.00 |
| Ex. 32 | 0.30 | 65.00 | 14.00 | 16.70 | 0.00 | 4.00 | 0.00 | 0.00 | 0.00 | 0.00 | 100.00 |
| Ex. 33 | 0.30 | 67.00 | 14.00 | 14.70 | 0.00 | 4.00 | 0.00 | 0.00 | 0.00 | 0.00 | 100.00 |
| Ex. 34 | 0.30 | 60.00 | 13.00 | 21.70 | 0.00 | 5.00 | 0.00 | 0.00 | 0.00 | 0.00 | 100.00 |
| Ex. 35 | 0.30 | 60.00 | 13.00 | 20.70 | 0.00 | 6.00 | 0.00 | 0.00 | 0.00 | 0.00 | 100.00 |
| Ex. 36 | 0.30 | 60.00 | 13.00 | 18.70 | 0.00 | 8.00 | 0.00 | 0.00 | 0.00 | 0.00 | 100.00 |
| Ex. 37 | 0.30 | 60.00 | 13.00 | 16.70 | 0.00 | 10.00 | 0.00 | 0.00 | 0.00 | 0.00 | 100.00 |
| Ex. 38 | 0.30 | 60.00 | 13.00 | 22.60 | 0.10 | 4.00 | 0.00 | 0.00 | 0.00 | 0.00 | 100.00 |
| Ex. 39 | 0.30 | 60.00 | 13.00 | 22.20 | 0.50 | 4.00 | 0.00 | 0.00 | 0.00 | 0.00 | 100.00 |
| Ex. 40 | 0.30 | 60.00 | 13.00 | 22.70 | 0.00 | 1.00 | 2.00 | 1.00 | 0.00 | 0.00 | 100.00 |

**[Table 1-3]**

| mol% | B₂O₃ | SiO₂ | Al₂O₃ | MgO | CaO | Li₂O | Na₂O | K₂O | TiO₂ | Y₂O₃ | Total |
|---|---|---|---|---|---|---|---|---|---|---|---|
| Ex. 41 | 0.30 | 60.00 | 13.00 | 19.70 | 0.00 | 1.00 | 3.00 | 3.00 | 0.00 | 0.00 | 100.00 |
| Ex. 42 | 0.30 | 60.00 | 10.00 | 25.70 | 0.00 | 4.00 | 0.00 | 0.00 | 0.00 | 0.00 | 100.00 |
| Ex. 43 | 0.30 | 70.00 | 13.00 | 12.70 | 0.00 | 4.00 | 0.00 | 0.00 | 0.00 | 0.00 | 100.00 |
| Ex. 44 | 0.30 | 65.00 | 13.50 | 17.20 | 0.00 | 3.50 | 0.00 | 0.00 | 0.50 | 0.00 | 100.00 |
| Ex. 45 | 0.30 | 65.00 | 13.00 | 17.20 | 0.00 | 3.50 | 0.00 | 0.00 | 1.00 | 0.00 | 100.00 |
| Ex. 46 | 0.30 | 65.00 | 14.00 | 16.70 | 0.00 | 3.50 | 0.00 | 0.00 | 0.50 | 0.00 | 100.00 |
| Ex. 47 | 0.30 | 65.00 | 14.00 | 16.20 | 0.00 | 3.50 | 0.00 | 0.00 | 1.00 | 0.00 | 100.00 |
| Ex. 48 | 0.30 | 65.00 | 13.50 | 16.70 | 0.00 | 3.50 | 0.00 | 0.00 | 1.00 | 0.00 | 100.00 |
| Ex. 49 | 0.30 | 65.00 | 13.50 | 17.20 | 0.00 | 3.50 | 0.00 | 0.00 | 0.00 | 0.50 | 100.00 |
| Ex. 50 | 0.30 | 65.00 | 13.00 | 17.20 | 0.00 | 3.50 | 0.00 | 0.00 | 0.00 | 1.00 | 100.00 |
| Ex. 51 | 0.30 | 65.00 | 14.00 | 16.70 | 0.00 | 3.50 | 0.00 | 0.00 | 0.00 | 0.50 | 100.00 |
| Ex. 52 | 0.30 | 65.00 | 14.00 | 16.20 | 0.00 | 3.50 | 0.00 | 0.00 | 0.00 | 1.00 | 100.00 |
| Ex. 53 | 0.30 | 65.00 | 13.50 | 16.70 | 0.00 | 3.50 | 0.00 | 0.00 | 0.00 | 1.00 | 100.00 |
| Ex. 54 | 0.30 | 60.00 | 11.00 | 24.70 | 0.00 | 4.00 | 0.00 | 0.00 | 0.00 | 0.00 | 100.00 |
| Ex. 55 | 0.30 | 60.00 | 12.00 | 23.70 | 0.00 | 4.00 | 0.00 | 0.00 | 0.00 | 0.00 | 100.00 |
| Ex. 56 | 0.30 | 54.00 | 15.00 | 24.70 | 0.00 | 6.00 | 0.00 | 0.00 | 0.00 | 0.00 | 100.00 |
| Ex. 57 | 0.30 | 56.00 | 15.00 | 22.70 | 0.00 | 6.00 | 0.00 | 0.00 | 0.00 | 0.00 | 100.00 |
| Ex. 58 | 0.30 | 60.00 | 13.00 | 21.70 | 1.00 | 4.00 | 0.00 | 0.00 | 0.00 | 0.00 | 100.00 |
| Ex. 59 | 0.00 | 60.00 | 19.00 | 19.00 | 0.00 | 2.00 | 0.00 | 0.00 | 0.00 | 0.00 | 100.00 |
| Ex. 60 | 0.00 | 60.00 | 19.00 | 18.00 | 0.00 | 3.00 | 0.00 | 0.00 | 0.00 | 0.00 | 100.00 |
| Ex. 61 | 0.00 | 60.00 | 19.00 | 17.00 | 0.00 | 4.00 | 0.00 | 0.00 | 0.00 | 0.00 | 100.00 |
| Ex. 62 | 0.00 | 60.00 | 19.00 | 16.00 | 0.00 | 5.00 | 0.00 | 0.00 | 0.00 | 0.00 | 100.00 |

**[Table 2-1]**

| mol% | Na₂O +K₂O | Li₂O/ MgO | Li₂O/ (Li₂O+MgO) | Al₂O₃ SiO₂ | B₂O₃/ SiO₂ | B₂O₃/ (B₂O₃+SiO₂) | B₂O₃/ (B₂O₃+SiO₂+Al₂O₃) | MgO/ (MgO+CaO+SrO+BaO) | Li₂O/ (Li₂O+Na₂O+K₂O) | B₂O₃/ Li₂O |
|---|---|---|---|---|---|---|---|---|---|---|
| Ex. 1 | 0.00 | 0.174 | 0.148 | 0.259 | 0.000 | 0.000 | 0.000 | 1.000 | 1.000 | 0.000 |
| Ex. 2 | 0.00 | 0.174 | 0.148 | 0.217 | 0.000 | 0.000 | 0.000 | 1.000 | 1.000 | 0.000 |
| Ex. 3 | 0.00 | 0.175 | 0.149 | 0.217 | 0.002 | 0.002 | 0.001 | 1.000 | 1.000 | 0.025 |
| Ex. 4 | 0.00 | 0.176 | 0.150 | 0.217 | 0.005 | 0.005 | 0.004 | 1.000 | 1.000 | 0.075 |
| Ex. 5 | 0.00 | 0.193 | 0.162 | 0.250 | 0.005 | 0.005 | 0.004 | 1.000 | 1.000 | 0.075 |
| Ex. 6 | 0.00 | 0.195 | 0.163 | 0.250 | 0.008 | 0.008 | 0.007 | 1.000 | 1.000 | 0.125 |
| Ex. 7 | 0.00 | 0.200 | 0.167 | 0.250 | 0.017 | 0.016 | 0.013 | 1.000 | 1.000 | 0.250 |
| Ex. 8 | 0.00 | 0.211 | 0.174 | 0.250 | 0.033 | 0.032 | 0.026 | 1.000 | 1.000 | 0.500 |
| Ex. 9 | 0.00 | 0.250 | 0.200 | 0.250 | 0.083 | 0.077 | 0.063 | 1.000 | 1.000 | 1.250 |
| Ex. 10 | 0.00 | 0.214 | 0.176 | 0.283 | 0.005 | 0.005 | 0.004 | 1.000 | 1.000 | 0.075 |
| Ex. 11 | 0.00 | 0.222 | 0.182 | 0.283 | 0.017 | 0.016 | 0.013 | 1.000 | 1.000 | 0.250 |
| Ex. 12 | 0.00 | 0.250 | 0.200 | 0.283 | 0.050 | 0.048 | 0.038 | 1.000 | 1.000 | 0.750 |
| Ex. 13 | 0.00 | 0.286 | 0.222 | 0.283 | 0.083 | 0.077 | 0.061 | 1.000 | 1.000 | 1.250 |
| Ex. 14 | 0.00 | 0.102 | 0.092 | 0.200 | 0.005 | 0.005 | 0.004 | 1.000 | 1.000 | 0.150 |
| Ex. 15 | 0.00 | 0.130 | 0.115 | 0.200 | 0.005 | 0.005 | 0.004 | 1.000 | 1.000 | 0.120 |
| Ex. 16 | 0.00 | 0.160 | 0.138 | 0.200 | 0.005 | 0.005 | 0.004 | 1.000 | 1.000 | 0.100 |
| Ex. 17 | 0.00 | 0.192 | 0.161 | 0.200 | 0.005 | 0.005 | 0.004 | 1.000 | 1.000 | 0.086 |
| Ex. 18 | 0.00 | 0.226 | 0.184 | 0.200 | 0.005 | 0.005 | 0.004 | 1.000 | 1.000 | 0.075 |
| Ex. 19 | 0.00 | 0.137 | 0.121 | 0.215 | 0.005 | 0.005 | 0.004 | 1.000 | 1.000 | 0.120 |
| Ex. 20 | 0.00 | 0.169 | 0.145 | 0.215 | 0.005 | 0.005 | 0.004 | 1.000 | 1.000 | 0.100 |

**[Table 2-2]**

| mol% | Na₂O +K₂O | Li₂O/ MgO | Li₂O/ (Li₂O+MgO) | Al₂O₃/ SiO₂ | B₂O₃/ SiO₂ | B₂O₃/ (B₂O₃+SiO₂) | B₂O₃/ (B₂O₃+SiO₂+Al₂O₃) | MgO/ (MgO+CaO+SrO+BaO) | Li₂O/ (Li₂O+Na₂O+K₂O) | H₂O₃/ Li₂O |
|---|---|---|---|---|---|---|---|---|---|---|
| Ex. 21 | 0.00 | 0.203 | 0.169 | 0.215 | 0.005 | 0.005 | 0.004 | 1.000 | 1.000 | 0.086 |
| Ex. 22 | 0.00 | 0.240 | 0.193 | 0.215 | 0.005 | 0.005 | 0.004 | 1.000 | 1.000 | 0.075 |
| Ex. 23 | 0.00 | 0.102 | 0.092 | 0.200 | 0.005 | 0.005 | 0.004 | 1.000 | 1.000 | 0.150 |
| Ex. 24 | 0.00 | 0.105 | 0.095 | 0.200 | 0.015 | 0.015 | 0.013 | 1.000 | 1.000 | 0.500 |
| Ex. 25 | 0.00 | 0.137 | 0.121 | 0.215 | 0.005 | 0.005 | 0.004 | 1.000 | 1.000 | 0.120 |
| Ex. 26 | 0.00 | 0.143 | 0.125 | 0.215 | 0.015 | 0.015 | 0.013 | 1.000 | 1.000 | 0.400 |
| Ex. 27 | 0.00 | 0.160 | 0.138 | 0.200 | 0.005 | 0.005 | 0.004 | 1.000 | 1.000 | 0.100 |
| Ex. 28 | 0.00 | 0.180 | 0.152 | 0.194 | 0.004 | 0.004 | 0.004 | 1.000 | 1.000 | 0.100 |
| Ex. 29 | 0.00 | 0.192 | 0.161 | 0.200 | 0.005 | 0.005 | 0.004 | 1.000 | 1.000 | 0.086 |
| Ex. 30 | 0.00 | 0.216 | 0.178 | 0.194 | 0.004 | 0.004 | 0.004 | 1.000 | 1.000 | 0.086 |
| Ex. 31 | 0.00 | 0.230 | 0.187 | 0.209 | 0.004 | 0.004 | 0.004 | 1.000 | 1.000 | 0.086 |
| Ex. 32 | 0.00 | 0.240 | 0.193 | 0.215 | 0.005 | 0.005 | 0.004 | 1.000 | 1.000 | 0.075 |
| Ex. 33 | 0.00 | 0.272 | 0.214 | 0.209 | 0.004 | 0.004 | 0.004 | 1.000 | 1.000 | 0.075 |
| Ex. 34 | 0.00 | 0.230 | 0.187 | 0.217 | 0.005 | 0.005 | 0.004 | 1.000 | 1.000 | 0.060 |
| Ex. 35 | 0.00 | 0.290 | 0.225 | 0.217 | 0.005 | 0.005 | 0.004 | 1.000 | 1.000 | 0.050 |
| Ex. 36 | 0.00 | 0.428 | 0.300 | 0.217 | 0.005 | 0.005 | 0.004 | 1.000 | 1.000 | 0.038 |
| Ex. 37 | 0.00 | 0.599 | 0.375 | 0.217 | 0.005 | 0.005 | 0.004 | 1.000 | 1.000 | 0.030 |
| Ex. 38 | 0.00 | 0.177 | 0.150 | 0.217 | 0.005 | 0.005 | 0.004 | 0.996 | 1.000 | 0.075 |
| Ex. 39 | 0.00 | 0.180 | 0.153 | 0.217 | 0.005 | 0.005 | 0.004 | 0.978 | 1.000 | 0.075 |
| Ex. 40 | 3.00 | 0.044 | 0.042 | 0.217 | 0.005 | 0.005 | 0.004 | 1.000 | 0.250 | 0.300 |

**[Table 2-3]**

| mol% | Na₂O +K₂O | Li₂O/ MgO | Li₂O/ (Li₂O+MgO) | Al₂O₃/ SiO₂ | B₂O₃ SiO₂ | B₂O₃/ (B₂O₃+SiO₂) | B₂O₃/ (B₂O₃+SiO₂+ Al₂O₃) | MgO/ (MgO+CaO+SrO+BaO) | Li₂O/ (Li₂O+Na₂O+K₂O) | B₂O₃/ Li₂O |
|---|---|---|---|---|---|---|---|---|---|---|
| Ex. 41 | 6.00 | 0.051 | 0.048 | 0.217 | 0.005 | 0.005 | 0.004 | 1.000 | 0.143 | 0.300 |
| Ex. 42 | 0.00 | 0.156 | 0.135 | 0.167 | 0.005 | 0.005 | 0.004 | 1.000 | 1.000 | 0.075 |
| Ex. 43 | 0.00 | 0.315 | 0.240 | 0.186 | 0.004 | 0.004 | 0.004 | 1.000 | 1.000 | 0.075 |
| Ex. 44 | 0.00 | 0.203 | 0.169 | 0.208 | 0.005 | 0.005 | 0.004 | 1.000 | 1.000 | 0.086 |
| Ex. 45 | 0.00 | 0.203 | 0.169 | 0.200 | 0.005 | 0.005 | 0.004 | 1.000 | 1.000 | 0.086 |
| Ex. 46 | 0.00 | 0.210 | 0.173 | 0.215 | 0.005 | 0.005 | 0.004 | 1.000 | 1.000 | 0.086 |
| Ex. 47 | 0.00 | 0.216 | 0.178 | 0.215 | 0.005 | 0.005 | 0.004 | 1.000 | 1.000 | 0.086 |
| Ex. 48 | 0.00 | 0.210 | 0.173 | 0.208 | 0.005 | 0.005 | 0.004 | 1.000 | 1.000 | 0.086 |
| Ex. 49 | 0.00 | 0.203 | 0.169 | 0.208 | 0.005 | 0.005 | 0.004 | 1.000 | 1.000 | 0.086 |
| Ex. 50 | 0.00 | 0.203 | 0.169 | 0.200 | 0.005 | 0.005 | 0.004 | 1.000 | 1.000 | 0.086 |
| Ex. 51 | 0.00 | 0.210 | 0.173 | 0.215 | 0.005 | 0.005 | 0.004 | 1.000 | 1.000 | 0.086 |
| Ex. 52 | 0.00 | 0.216 | 0.178 | 0.215 | 0.005 | 0.005 | 0.004 | 1.000 | 1.000 | 0.086 |
| Ex. 53 | 0.00 | 0.210 | 0.173 | 0.208 | 0.005 | 0.005 | 0.004 | 1.000 | 1.000 | 0.086 |
| Ex. 54 | 0.00 | 0.162 | 0.139 | 0.183 | 0.005 | 0.005 | 0.004 | 1.000 | 1.000 | 0.075 |
| Ex. 55 | 0.00 | 0.169 | 0.144 | 0.200 | 0.005 | 0.005 | 0.004 | 1.000 | 1.000 | 0.075 |
| Ex. 56 | 0.00 | 0.243 | 0.195 | 0.278 | 0.006 | 0.006 | 0.004 | 1.000 | 1.000 | 0.050 |
| Ex. 57 | 0.00 | 0.264 | 0.209 | 0.268 | 0.005 | 0.005 | 0.004 | 1.000 | 1.000 | 0.050 |
| Ex. 58 | 0.00 | 0.184 | 0.156 | 0.217 | 0.005 | 0.005 | 0.004 | 0.956 | 1.000 | 0.075 |
| Ex. 59 | 0.00 | 0.105 | 0.095 | 0.317 | 0.000 | 0.000 | 0.000 | 1.000 | 1.000 | 0.000 |
| Ex. 60 | 0.00 | 0.167 | 0.143 | 0.317 | 0.000 | 0.000 | 0.000 | 1.000 | 1.000 | 0.000 |
| Ex. 61 | 0.00 | 0.235 | 0.190 | 0.317 | 0.000 | 0.000 | 0.000 | 1.000 | 1.000 | 0.000 |
| Ex. 62 | 0.00 | 0.313 | 0.238 | 0.317 | 0.000 | 0.000 | 0.000 | 1.000 | 1.000 | 0.000 |

**[Table 3-1]**

| | Specific elastic modulus E/d (MNm/kg) | Young's modulus E (GPa) | Specific gravity d | Glass transition temperature Tg (°C) | Average linear expansion coefficient a (×10⁻⁷/°C) | Liquidus temperature LT (°C) |
|---|---|---|---|---|---|---|
| Ex. 1 | 38.8 | 99.9 | 2.58 | 723 | 45.0 | 1290 |
| Ex. 2 | 38.5 | 98.4 | 2.56 | 719 | 44.9 | 1290 |
| Ex. 3 | 38.4 | 98.2 | 2.56 | 717 | 44.8 | 1280 |
| Ex. 4 | 38.3 | 97.8 | 2.55 | 715 | 44.9 | 1230 |
| Ex. 5 | 38.4 | 98.5 | 2.57 | 727 | 42.7 | 1280 |
| Ex. 6 | 38.3 | 98.3 | 2.57 | 725 | 42.5 | 1280 |
| Ex. 7 | 38.2 | 97.6 | 2.56 | 722 | 43.0 | |
| Ex. 8 | 37.8 | 96.2 | 2.54 | 715 | 42.0 | |
| Ex. 9 | 36.6 | 91.5 | 2.50 | 697 | 39.2 | 1320 |
| Ex. 10 | 38.6 | 98.2 | 2.55 | 737 | 41.8 | 1300 |
| Ex. 11 | 38.4 | 97.5 | 2.54 | 732 | 41.1 | 1320 |
| Ex. 12 | 37.6 | 94.4 | 2.51 | 719 | 39.9 | |
| Ex. 13 | 36.9 | 91.6 | 2.48 | 707 | 38.3 | |
| Ex. 14 | 38.1 | 95.8 | 2.52 | 756 | 36.9 | |
| Ex 15 | 38.2 | 95.9 | 2.51 | 745 | 38.4 | 1310 |
| Ex. 16 | 37.9 | 95.1 | 2.51 | 740 | 38.1 | 1300 |
| Ex. 17 | 37.9 | 95.1 | 2.51 | 734 | 39.5 | (1300 or less) |
| Ex. 18 | 37.5 | 93.6 | 2.50 | 722 | 40.4 | (1300 or less) |
| Ex. 19 | 38.2 | 96.0 | 2.51 | 751 | 37.2 | |
| Ex. 20 | 37.9 | 94.9 | 2.50 | 745 | 38.3 | 1290 |

**[Table 3-2]**

| | Specific elastic modulus E/d (MNm/kg) | Young's modulus E (GPa) | Specific gravity d | Glass transition temperature Tg (°C) | Average linear expansion coefficient a (×10⁻⁷/°C) | Liquidus temperature LT (°C) |
|---|---|---|---|---|---|---|
| Ex. 21 | 38.1 | 95.2 | 2.50 | 739 | 38.9 | 1280 |
| Ex. 22 | 37.8 | 94.4 | 2.50 | 732 | 39.0 | (1300 or less) |
| Ex. 23 | 38.1 | 95.8 | 2.52 | 756 | 36.9 | 1320 |
| Ex. 24 | 37.7 | 94.3 | 2.50 | 748 | 39.1 | 1320 |
| Ex. 25 | 38.2 | 96.0 | 2.51 | 754 | 37.2 | 1320 |
| Ex. 26 | 38.0 | 94.8 | 2.50 | 745 | 37.1 | 1320 |
| Ex. 27 | 37.9 | 95.1 | 2.51 | 740 | 38.1 | |
| Ex. 28 | 37.8 | 94.1 | 2.49 | 746 | 37.8 | 1300 |
| Ex. 29 | 37.9 | 95.1 | 2.51 | 734 | 39.5 | (1300 or less) |
| Ex. 30 | 37.8 | 93.9 | 2.48 | 739 | 37.5 | |
| Ex. 31 | 37.6 | 93.3 | 2.48 | 745 | 37.1 | 1280 |
| Ex. 32 | 37.8 | 94.4 | 2.50 | 732 | 39.0 | (1300 or less) |
| Ex. 33 | 37.4 | 92.7 | 2.48 | 741 | 38.1 | (1300 or less) |
| Ex. 34 | 38.5 | 97.5 | 2.53 | 672 | 48.2 | |
| Ex. 35 | 38.4 | 97.2 | 2.53 | 650 | 50.4 | |
| Ex. 36 | 38.3 | 96.6 | 2.52 | 606 | 54.8 | |
| Ex. 37 | 38.3 | 96.4 | 2.52 | 562 | 59.2 | |
| Ex. 38 | 38.4 | 98.0 | 2.56 | 716 | 46.9 | |
| Ex. 39 | 38.3 | 98.9 | 2.58 | 727 | 48.3 | |
| Ex. 40 | 35.9 | 93.8 | 2.61 | 735 | 56.8 | |

**[Table 3-3]**

| | Specific elastic modulus E/d (MNm/kg) | Young's modulus E (GPa) | Specific gravity d | Glass transition temperature Tg (°C) | Average linear expansion coefficient a (×10⁻⁷/°C) | Liquidus temperature LT (°C) |
|---|---|---|---|---|---|---|
| Ex. 41 | 35.1 | 92.3 | 2.63 | 746 | 62.5 | |
| Ex. 42 | 38.0 | 96.4 | 2.54 | 678 | 47.2 | |
| Ex. 43 | 36.3 | 88.4 | 2.44 | 749 | 42.7 | |
| Ex. 44 | 37.7 | 94.2 | 2.50 | 732 | 40.5 | 1250 |
| Ex. 45 | 37.4 | 93.6 | 2.50 | 728 | 37.5 | 1260 |
| Ex. 46 | 37.6 | 94.0 | 2.50 | 737 | 38.2 | 1250 |
| Ex. 47 | 38.2 | 95.4 | 2.50 | 730 | 38.5 | 1260 |
| Ex. 48 | 37.4 | 93.6 | 2.50 | 731 | 37.5 | 1260 |
| Ex. 49 | 37.6 | 95.2 | 2.53 | 738 | 41.1 | 1260 |
| Ex. 50 | 37.6 | 96.2 | 2.56 | 735 | 38.9 | 1320 |
| Ex. 51 | 37.8 | 95.5 | 2.53 | 737 | 38.4 | 1260 |
| Ex. 52 | 37.3 | 95.4 | 2.56 | 730 | 38.8 | 1260 |
| Ex. 53 | 37.8 | 96.7 | 2.56 | 731 | 39.0 | 1250 |
| Ex. 54 | 37.9 | 96.6 | 2.55 | 684 | 46.3 | |
| Ex. 55 | 38.0 | 96.8 | 2.55 | 678 | 45.2 | |
| Ex. 56 | 39.2 | 101.6 | 2.59 | 679 | 54.0 | |
| Ex. 57 | 38.8 | 100.1 | 2.58 | 697 | 52.5 | |
| Ex. 58 | 38.5 | 98.6 | 2.56 | 723 | 48.3 | |
| Ex. 59 | 39.3 | 101.2 | 2.57 | 781 | 44.5 | |
| Ex. 60 | 39.1 | 100.2 | 2.57 | 777 | 46.3 | |
| Ex. 61 | 39.1 | 100.0 | 2.56 | 757 | 41.2 | |
| Ex. 62 | 38.6 | 98.4 | 2.55 | 751 | 46.5 | |

**[Table 4]**

| Ex. | | SiO₂ | Al₂O₃ | B₂O₃ | Li₂O | Na₂O | K₂O | MgO | CaO | SrO | BaO | Total |
|---|---|---|---|---|---|---|---|---|---|---|---|---|
| 63 | mol% | 65.00 | 14.00 | 0.30 | 0.00 | 3.50 | 0.00 | 17.20 | 0.00 | 0.00 | 0.00 | 100.00 |
| 64 | | 65.00 | 14.50 | 0.30 | 0.00 | 3.50 | 0.00 | 16.70 | 0.00 | 0.00 | 0.00 | 100.00 |
| 65 | | 65.00 | 15.00 | 0.30 | 0.00 | 3.50 | 0.00 | 16.20 | 0.00 | 0.00 | 0.00 | 100.00 |
| 66 | | 60.00 | 13.00 | 0.30 | 0.00 | 4.00 | 0.00 | 22.70 | 0.00 | 0.00 | 0.00 | 100.00 |
| 67 | | 65.00 | 14.00 | 0.30 | 1.75 | 1.75 | 0.00 | 17.20 | 0.00 | 0.00 | 0.00 | 100.00 |
| 68 | | 60.00 | 13.00 | 0.30 | 2.00 | 2.00 | 0.00 | 22.70 | 0.00 | 0.00 | 0.00 | 100.00 |
| 69 | | 62.00 | 13.00 | 0.30 | 0.00 | 4.00 | 0.00 | 20.70 | 0.00 | 0.00 | 0.00 | 100.00 |
| 70 | | 63.00 | 13.00 | 0.30 | 0.00 | 4.00 | 0.00 | 19.70 | 0.00 | 0.00 | 0.00 | 100.00 |
| 71 | | 65.00 | 13.00 | 0.30 | 0.50 | 3.50 | 0.00 | 17.70 | 0.00 | 0.00 | 0.00 | 100.00 |
| 72 | | 65.00 | 13.00 | 0.30 | 1.00 | 3.00 | 0.00 | 17.70 | 0.00 | 0.00 | 0.00 | 100.00 |
| 73 | | 65.00 | 10.00 | 0.30 | 1.50 | 2.50 | 0.00 | 20.70 | 0.00 | 0.00 | 0.00 | 100.00 |
| 74 | | 65.00 | 11.00 | 0.30 | 1.00 | 3.00 | 0.00 | 19.70 | 0.00 | 0.00 | 0.00 | 100.00 |
| 75 | | 65.00 | 12.00 | 0.30 | 1.00 | 3.00 | 0.00 | 18.70 | 0.00 | 0.00 | 0.00 | 100.00 |
| 76 | | 65.00 | 13.00 | 0.10 | 1.00 | 3.00 | 0.00 | 17.90 | 0.00 | 0.00 | 0.00 | 100.00 |
| 77 | | 65.00 | 13.00 | 0.50 | 1.00 | 3.00 | 0.00 | 17.50 | 0.00 | 0.00 | 0.00 | 100.00 |
| 78 | | 65.00 | 13.00 | 0.30 | 0.20 | 3.80 | 0.00 | 17.70 | 0.00 | 0.00 | 0.00 | 100.00 |
| 79 | | 65.00 | 13.00 | 0.30 | 1.00 | 3.00 | 0.00 | 16.70 | 1.00 | 0.00 | 0.00 | 100.00 |
| 80 | | 67.70 | 13.00 | 0.30 | 1.00 | 3.00 | 0.00 | 15.00 | 0.00 | 0.00 | 0.00 | 100.00 |
| 81 | | 70.00 | 13.00 | 0.30 | 1.00 | 3.00 | 0.00 | 12.70 | 0.00 | 0.00 | 0.00 | 100.00 |

**[Table 5]**

| Ex. | | MgO+SrO+CaO+BaO | MgO/ (MgO+ CaO+ SrO+BaO) | Na₂O/MgO | Li₂O/ (Li₂O+ Na₂O+ K₂O) | SiO₂/ Na₂O |
|---|---|---|---|---|---|---|
| 63 | mol% | 17.20 | 1.000 | 0.203 | 0.000 | 18.6 |
| 64 | | 16.70 | 1.000 | 0.210 | 0.000 | 18.6 |
| 65 | | 16.20 | 1.000 | 0.216 | 0.000 | 18.6 |
| 66 | | 22.70 | 1.000 | 0.176 | 0.000 | 15.0 |
| 67 | | 17.20 | 1.000 | 0.102 | 0.500 | 37.1 |
| 68 | | 22.70 | 1.000 | 0.088 | 0.500 | 30.0 |
| 69 | | 20.70 | 1.000 | 0.193 | 0.000 | 15.5 |
| 70 | | 19.70 | 1.000 | 0.203 | 0.000 | 15.8 |
| 71 | | 17.70 | 1.000 | 0.198 | 0.125 | 18.6 |
| 72 | | 17.70 | 1.000 | 0.169 | 0.250 | 21.7 |
| 73 | | 20.70 | 1.000 | 0.121 | 0.375 | 26.0 |
| 74 | | 19.70 | 1.000 | 0.152 | 0.250 | 21.7 |
| 75 | | 18.70 | 1.000 | 0.160 | 0.250 | 21.7 |
| 76 | | 17.90 | 1.000 | 0.168 | 0.250 | 21.7 |
| 77 | | 17.50 | 1.000 | 0.171 | 0.250 | 21.7 |
| 78 | | 17.70 | 1.000 | 0.215 | 0.050 | 17.1 |
| 79 | | 17.70 | 0.944 | 0.180 | 0.250 | 21.7 |
| 80 | | 15.00 | 1.000 | 0.200 | 0.250 | 22.6 |
| 81 | | 12.70 | 1.000 | 0.236 | 0.250 | 23.3 |

**[Table 6]**

| Ex. | | Na₂O/ (Li₂O+ Na₂O+ K₂O) | SiO₂+B₂O₃+ Al₂O₃ | SiO₂+B₂O₃ | SiO₂+ Al₂O₃ |
|---|---|---|---|---|---|
| 63 | mol% | 1.000 | 79.30 | 65.30 | 79.00 |
| 64 | | 1.000 | 79.80 | 65.30 | 79.50 |
| 65 | | 1.000 | 80.30 | 65.30 | 80.00 |
| 66 | | 1.000 | 73.30 | 60.30 | 73.00 |
| 67 | | 0.500 | 79.30 | 65.30 | 79.00 |
| 68 | | 0.500 | 73.30 | 60.30 | 73.00 |
| 69 | | 1.000 | 75.30 | 62.30 | 75.00 |
| 70 | | 1.000 | 76.30 | 63.30 | 76.00 |
| 71 | | 0.875 | 78.30 | 65.30 | 78.00 |
| 72 | | 0.750 | 78.30 | 65.30 | 78.00 |
| 73 | | 0.625 | 75.30 | 65.30 | 75.00 |
| 74 | | 0.750 | 76.30 | 65.30 | 76.00 |
| 75 | | 0.750 | 77.30 | 65.30 | 77.00 |
| 76 | | 0.750 | 78.10 | 65.10 | 78.00 |
| 77 | | 0.750 | 78.50 | 65.50 | 78.00 |
| 78 | | 0.950 | 78.30 | 65.30 | 78.00 |
| 79 | | 0.750 | 78.30 | 65.30 | 78.00 |
| 80 | | 0.750 | 81.00 | 68.00 | 80.70 |
| 81 | | 0.750 | 83.30 | 70.30 | 83.00 |

**[Table 7]**

| Ex. | Specific elastic modulus E/d (MNm/kg) | Young's modulus E (GPa) | Specific gravity d | Glass transition temperature Tg (°C) | Average linear expansion coefficient a (×10⁻⁷/°C) | Liquidus temperature LT (°C) |
|---|---|---|---|---|---|---|
| 63 | 36.1 | 90.4 | 2.50 | 771 | 40.6 | 1270 |
| 64 | 36.2 | 90.5 | 2.50 | 772 | | |
| 65 | 36.4 | 90.9 | 2.50 | 775 | | |
| 66 | 36.6 | 93.3 | 2.55 | 754 | 46.7 | 1250 |
| 67 | 37.4 | 93.5 | 2.50 | 748 | | |
| 68 | 37.7 | 96.1 | 2.55 | 728 | 45.7 | 1250 |
| 69 | 36.3 | 92.0 | 2.54 | 754 | 46.5 | |
| 70 | 36.2 | 91.6 | 2.53 | 759 | 44.1 | |
| 71 | 36.1 | 90.8 | 2.52 | 752 | 43.0 | 1260 |
| 72 | 36.7 | 92.5 | 2.52 | 744 | 41.9 | 1250 |
| 73 | 35.0 | 88.1 | 2.52 | 701 | | |
| 74 | 35.2 | 88.3 | 2.51 | 722 | | |
| 75 | 35.6 | 89.1 | 2.50 | 731 | | |
| 76 | 36.8 | 92.8 | 2.52 | 748 | | |
| 77 | 36.5 | 91.9 | 2.52 | 739 | | |
| 78 | 36.1 | 90.5 | 2.51 | 756 | | |
| 79 | 36.2 | 91.7 | 2.53 | 741 | | |
| 80 | 35.7 | 90.3 | 2.53 | 763 | | |
| 81 | 35.8 | 90.1 | 2.52 | 773 | | |

**[Table 8]**

| Ex. | 1300°C 16h holding test | 1320°C 16h holding test | Percentage of Ra when Ra of Ex. 4 is 1.00 | Roughness evaluation rank |
|---|---|---|---|---|
| 63 | A | A | 0.75 | A |
| 64 | A | A | | |
| 65 | A | A | | |
| 66 | A | A | 1.00 | C |
| 67 | A | A | 0.73 | A |
| 68 | A | A | 0.87 | B |
| 69 | | A | 0.92 | C |
| 70 | | A | 0.80 | B |
| 71 | | A | 0.74 | A |
| 72 | | A | 0.73 | A |
| 73 | | A | | A |
| 74 | | A | | A |
| 75 | | A | | A |
| 76 | | A | | A |
| 77 | | A | | A |
| 78 | | A | | A |
| 79 | | B | | A |
| 80 | | B | | A |
| 81 | | B | | A |

From the results shown in the above tables, it can be confirmed that the glasses of Examples 1 to 81 have high rigidity. For example, the glass of Example 27 shown in Table 5 of JP 2002-358626A (referred to as "comparative glass" hereinafter) has a glass composition containing SiO₂ in an amount of 65.0 mol%, Al₂O₃ in an amount of 7.0 mol%, MgO in an amount of 1.0 mol%, CaO in an amount of 1.0 mol%, Li₂O in an amount of 10.0 mol%, Na₂O in an amount of 10.5 mol%, and K₂O in an amount of 2.5 mol%, and this glass composition is different from the glass composition of a glass according to an aspect of the present invention described above in detail. A value calculated by dividing the value of the Young's modulus of the comparative glass shown in Table 5 of JP 2002-358626A by the value of the density is about 32.45, which is lower than the values of specific elastic moduli of Examples 1 to 81 shown in the above tables.

### (7) Temperature T1 at viscosity of 10^{2.0} dPa·s and temperature T2 at viscosity of 10^{2.5} dPa·s

The temperatures T1 and T2 of the glasses of Examples 1 to 81 were measured with use of the platinum ball pulling-up method.

The temperatures T1 of the glasses of Examples 1 to 62 were 1600°C or less. For example, the temperature T1 was 1468°C in Example 4 and 1593°C in Example 21.

The temperatures T1 of the glasses of Examples 63 to 79 were 1670°C or less. For example, the temperature T1 was 1635°C in Example 71 and 1662°C in Example 72.

The temperatures T1 of the glasses of Examples 80 and 81 were 1700°C or less.

The temperatures T2 of the glasses of Examples 1 to 62 were 1500°C or less. For example, the temperature T2 was 1364°C in Example 4 and 1481°C in Example 21.

The temperatures T2 of the glasses of Examples 63 to 79 were 1530°C or less. For example, the temperature T1 was 1510°C in Example 71 and 1520°C in Example 72.

The temperatures T2 of the glasses of Examples 80 and 81 were 1560°C or less.

### <Manufacture of magnetic recording medium substrate>

### (1) Manufacture of substrate blank

A disk-shaped substrate blank was manufactured using a method A or B below. It is also possible to obtain a glass blank for manufacturing a glass spacer for a magnetic recording/reproducing device, using the same method.

### (Method A)

With regard to a glass having a composition shown in the above tables, clarified and homogenized molten glass was caused to flow out at a constant flow rate from an outflow pipe and was received with a lower die for press molding, and the molten glass that has flowed out was cut with a cutting blade so that a predetermined amount of molten glass lump was obtained on the lower die. Then, the lower die holding the molten glass lump was immediately taken out from below the pipe and the molten glass lump was press-molded into a thin disk shape having a diameter of 99 mm and a thickness of 0.7 mm, through the use of an upper die facing the lower die and a drum die. The press-molded product was cooled to temperatures not causing the product to change shape, and then it was taken out from the die and annealed to give a substrate blank (amorphous oxide glass). Note that, in the above-described molding, a plurality of lower dies were used for molding the molten glass that has flowed out into disk-shaped substrate blanks one after another.

### (Method B)

With regard to a glass having a composition shown in the above tables, clarified and homogenized molten glass was continuously cast from above into a heat resistant mold provided with a tubular through hole via the through hole, and the molten glass was then molded into a round column and was taken out from the lower side of the through hole. The taken-out glass was annealed and was then sliced at fixed intervals in the direction perpendicular to the round columnar axis through the use of a multi wire saw to thereby manufacture disk-shaped substrate blanks (amorphous oxide glass).

Note that, although the above-described methods A and B were employed in this example, methods C and D below are also suitable as methods for manufacturing a disk-shaped substrate blank. Also, the methods C and D below are also suitable as methods for manufacturing a glass blank for manufacturing a glass spacer for a magnetic recording/reproducing device.

### (Method C)

It is also possible to obtain a substrate blank (amorphous oxide glass) by: allowing the molten glass to flow out onto a float bath; molding the same into a sheet-shaped glass (molding by a float method); subsequently annealing the same; and then boring a disk-shaped glass from the sheet glass.

### (Method D)

It is also possible to obtain a substrate blank (amorphous oxide glass) by: molding the molten glass into a sheet-shaped glass, using an overflow down-draw method (fusion method); annealing the same; and then boring a disk-shaped glass from the sheet glass.

### (2) Manufacture of glass substrate

A through hole was bored in the center of the substrate blank (amorphous oxide glass) obtained using each of the above-described methods, and grinding processing was then performed on an outer circumferential surface and an inner circumferential surface of the resulting substrate blank (chamfered surfaces were formed at the same time). Then, edge surfaces were polished, and main surfaces of the disk were subjected to lapping and polishing (mirror polishing processing) and thereby the disk was finished into a glass substrate for a magnetic disk having an outer diameter of 97 mm and a thickness of 0.5 mm including a circular hole that defined the inner circumferential surface and had a diameter of 25 mm. It is also possible to finish a glass blank for manufacturing a glass spacer for a magnetic recording/reproducing device into a glass spacer for a magnetic recording/reproducing device, using the same method.

The glass substrate obtained as described above was cleaned by scrubbing, subsequently cleaned through the use of an aqueous solution of potassium hydroxide, and the glass substrate was then rinsed with pure water and dried. When surfaces of the substrates manufactured from the glasses of Examples were observed with use of an atomic force microscope (AFM), surface roughness and the like were not recognized and the surfaces were smooth (the roughness was small).

### <Manufacture of magnetic recording medium (magnetic disk)>

Using the following methods, an adhesive layer, an undercoat layer, a magnetic recording layer, a protecting layer, and a lubricating layer were formed in this order on the main surface of each glass substrate for a magnetic disk manufactured as described above to obtain a magnetic disk.

First, an adhesive layer, an undercoat layer, and a magnetic recording layer were sequentially formed using a DC magnetron sputtering method in an Ar atmosphere through the use of an evacuated film formation device.

At this time, the adhesive layer was formed through the use of a CrTi target so as to give an amorphous CrTi layer having a thickness of 20 nm. Subsequently, an MgO layer with a thickness of 10 nm was formed as the undercoat layer. Furthermore, the magnetic recording layer was formed at a film formation temperature of 200°C to 400°C through the use of an FePtC or CoPtC target so as to give an FePt granular layer or a CoPt granular layer having a thickness of 10 nm.

The magnetic disk, in which film formation up to the magnetic recording layer had been finished, was moved from the film formation device into a heating furnace to be subjected to annealing. The temperature in the heating furnace in annealing was set in a range of 500°C to 700°C. Magnetic particles made of a CoPt-based alloy or an FePt-based alloy having an L₁₀ ordered structure were formed through this annealing process. Note that there is no limitation thereto, and heating of the magnetic recording layer need only be performed to realize an L₁₀ ordered structure. For example, the L₁₀ ordered structure may also be formed by setting the temperature of the substrate to 500°C to 700°C in the formation of the magnetic recording layer made of FePt or CoPt.

Then, a protecting layer made of hydrogenated carbon and having a thickness of 3 nm was formed using a CVD method from ethylene used as material gas. After that, a lubricating layer was formed using a dip coating method from PFPE (perfluoropolyether). The thickness of the lubricating layer was 1 nm.

A magnetic disk was obtained through the above-described manufacturing process. The obtained magnetic disk was mounted on a hard disk drive provided with a DFH mechanism, and magnetic signals were recorded with a recording density of 1000 gigabits per 1 square inch in a recording region on the main surface of the magnetic disk, and the magnetic signals were reproduced. At this time, a phenomenon (crash failure) in which a magnetic head and the magnetic disk surface collide with each other was not confirmed.

Also, a glass spacer obtained by forming an NiP alloy-conductive film on a surface of the glass spacer obtained through the above-described manufacturing process with the use of a glass having a composition shown in the above tables (a glass spacer provided with the NiP alloy film) was mounted on a hard disk drive provided with a DFH mechanism, and magnetic signals were recorded with a recording density of 1000 gigabits per 1 square inch in a recording region on the main surface of a magnetic disk that was separately prepared using a substrate made of a material that is different from that of glass according to an aspect of the present invention, and the magnetic signals were reproduced. At this time, a phenomenon (crash failure) in which a magnetic head and the magnetic disk surface collide with each other was not confirmed.

Also, the magnetic disk and the glass spacer provided with the NiP alloy film that were manufactured as described above using the same glass material according an aspect of the present invention were mounted on a hard disk drive provided with a DFH mechanism, and magnetic signals were recorded with a recording density of 1000 gigabits per 1 square inch in a recording region on the main surface of the magnetic disk, and the magnetic signals were reproduced. At this time, a phenomenon (crash failure) in which a magnetic head and the magnetic disk surface collide with each other was not confirmed. Here, the glass substrate included in the above-described magnetic disk and the above-described glass spacer were made of the same glass material, and thus phenomena that may occur due to the above-described difference in the thermal expansion coefficient do not occur.

According to an aspect of the present invention, it is possible to provide a magnetic recording medium suitable for high-density recording.

It should be considered that all the disclosed embodiments are exemplifications in all aspects and are not restrictive ones. It is intended that the scope of the present invention is shown not by the above descriptions but by the claims, and encompasses all changes in equivalent meanings and ranges to the scope of the claims.

For example, it is possible to manufacture a glass for a magnetic recording medium substrate and a glass spacer for a magnetic recording/reproducing device according to respective aspects of the present invention by performing composition adjustment described in this specification on a glass composition exemplified above.

Furthermore, it is possible, needless to say, to suitably combine two or more items exemplified or described as preferable ranges in the specification.

## Claims

1. A glass for a magnetic recording medium substrate, the glass being an amorphous glass,
wherein a temperature T1 at a viscosity of 10^{2.0} dPa·s is 1600°C or less, and
a specific elastic modulus is 34.0 MNm/kg or more.

2. The glass for a magnetic recording medium substrate according to claim 1,
wherein a total content of Li₂O and Na₂O (Li₂O+Na₂O) is 0.50 mol% or more.

3. A glass for a magnetic recording medium substrate, the glass being an amorphous glass,
wherein a temperature T2 at a viscosity of 10^{2.5} dPa·s is 1500°C or less, and
a specific elastic modulus is 34.0 MNm/kg or more.

4. The glass for a magnetic recording medium substrate according to claim 3,
wherein a total content of Li₂O and Na₂O (Li₂O+Na₂O) is 0.50 mol% or more.

5. A glass for a magnetic recording medium substrate, the glass being an amorphous glass,
wherein a temperature T1 at a viscosity of 10^{2.0} dPa·s is 1600°C or less, and
a total content of Li₂O and Na₂O (Li₂O+Na₂O) is 0.50 mol% or more.

6. A magnetic recording medium substrate made of the glass for a magnetic recording medium substrate according to any one of claims 1 to 5.

7. A magnetic recording medium comprising:
the magnetic recording medium substrate according to claim 6; and
a magnetic recording layer.

8. A magnetic recording/reproducing device comprising the magnetic recording medium according to claim 7.
